(19) Europäisches Patentamt
European Patent Office
Office européen des brevets

(11) EP 4 351 022 A1

(12) EUROPEAN PATENT APPLICATION
published in accordance with Art. 153(4) EPC

(43) Date of publication:
10.04.2024 Bulletin 2024/15

(51) International Patent Classification (IPC):
H04B 1/525 $^{(2015.01)}$    H04B 1/04 $^{(2006.01)}$
H04B 1/10 $^{(2006.01)}$

(21) Application number: 22819390.0

(22) Date of filing: 27.05.2022

(52) Cooperative Patent Classification (CPC):
H04B 1/04; H04B 1/10; H04B 1/40; H04B 1/525;
H04B 15/00; H04L 5/14; H04W 52/24

(86) International application number:
PCT/CN2022/095738

(87) International publication number:
WO 2022/257792 (15.12.2022 Gazette 2022/50)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 07.06.2021 CN 202110632854

(71) Applicant: Huawei Technologies Co., Ltd.
Longgang
Shenzhen, Guangdong 518129 (CN)

(72) Inventors:
• LIU, Daqing
  Shenzhen, Guangdong 518129 (CN)
• DAI, Kaifeng
  Shenzhen, Guangdong 518129 (CN)
• XU, Zhen
  Shenzhen, Guangdong 518129 (CN)
• QIAO, Yunfei
  Shenzhen, Guangdong 518129 (CN)
• WANG, Jun
  Shenzhen, Guangdong 518129 (CN)

(74) Representative: Gill Jennings & Every LLP
The Broadgate Tower
20 Primrose Street
London EC2A 2ES (GB)

(54) **FULL DUPLEX COMMUNICATION APPARATUS AND METHOD**

(57) This application discloses a full-duplex communication apparatus and method, which are applicable to interference cancellation in a multi-antenna scenario, to reduce complexity of multi-antenna interference cancellation and reduce a volume of an interference cancellation apparatus, without affecting efficiency of a transmitter. The apparatus includes an antenna, an interference cancellation module, a power splitting module, and a combiner module. The antenna includes $N_1$ first transmit ports and $N_2$ first receive ports. The interference cancellation module includes $N_1$ second transmit ports and $N_2$ second receive ports. Each of the second transmit ports includes $M_1$ transmit subports, and each of the second receive ports includes $M_2$ receive subports. L different elements in a second scattering parameter matrix are C times L different elements in a first scattering parameter matrix, and positions of the L different elements in the first scattering parameter matrix and positions of the L different elements in the second scattering parameter matrix are correspondingly the same, where C is a constant, and a modulus of C is greater than 1.

FIG. 2

## Description

This application claims priority to Chinese Patent Application No. 202110632854.1, filed with the China National Intellectual Property Administration on June 7, 2021 and entitled "FULL-DUPLEX COMMUNICATION APPARATUS AND METHOD", which is incorporated herein by reference in its entirety.

## TECHNICAL FIELD

This application relates to the field of communication technologies, and in particular, to a full-duplex communication apparatus and method.

## BACKGROUND

Full-duplex (full duplex, FD) communication is to send and receive data at same time, on a same frequency, and on a same channel. A wireless full-duplex communication technology is always a research topic in the field of communication. However, because a transmit antenna and a receive antenna work at same time and on a same frequency, the transmit antenna causes strong interference to the receive antenna. Therefore, reducing interference between the transmit antenna and the receive antenna is a main problem faced in full-duplex communication.

In a multi-antenna application scenario, an effect of interference cancellation in current full-duplex communication is still not ideal.

## SUMMARY

Embodiments of this application provide a full-duplex communication apparatus and method, to reduce complexity of multi-antenna interference cancellation and reduce a volume of an interference cancellation module, with relatively small impact on efficiency of a transmitter.

According to a first aspect, an embodiment of this application provides a full-duplex communication apparatus, where the apparatus includes an antenna, an interference cancellation module, a power splitting module, and a combiner module.

The antenna includes $N_1$ first transmit ports and $N_2$ first receive ports, where $N_1$ is an integer greater than or equal to 2, and $N_2$ is an integer greater than or equal to 2. The interference cancellation module includes $N_1$ second transmit ports and $N_2$ second receive ports. A first scattering parameter matrix includes L different elements, a second scattering parameter matrix includes L different elements, positions of the L different elements in the first scattering parameter matrix and positions of the L different elements in the second scattering parameter matrix are correspondingly the same, the L different elements in the second scattering parameter matrix are C times the L different elements in the first scattering parameter matrix, the first scattering parameter matrix is a scattering parameter matrix between the $N_2$ first receive ports and the $N_1$ first transmit ports, and the second scattering parameter matrix is a scattering parameter matrix between the $N_2$ second receive ports and the $N_1$ second transmit ports, where L is a positive integer less than or equal to $N_1 * Nz$, C is a constant, and a modulus of C is greater than 1. The power splitting module includes $N_1$ first output ports and $N_1$ second output ports, where the first output ports are one-to-one connected to the first transmit ports, and the second output ports are one-to-one connected to the second transmit ports. The combiner module includes $N_2$ first input ports and $N_2$ second input ports, where the first input ports are one-to-one connected to the first receive ports, and the second input ports are one-to-one connected to the second receive ports.

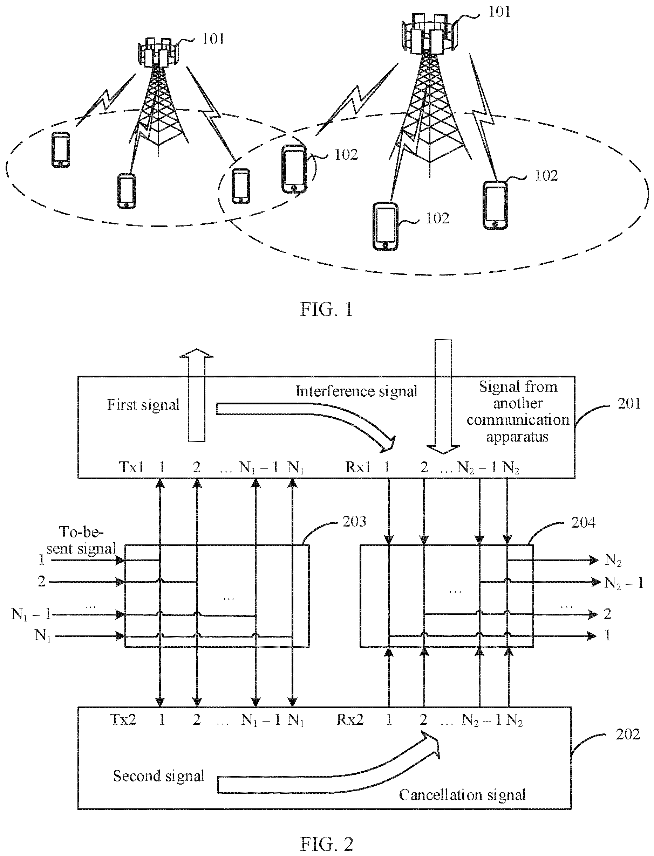

It may be understood that, for descriptions of the foregoing one-to-one connections, refer to FIG. 2. For example, one first output port may be connected to one first transmit port, and one second output port is connected to one second transmit port. For example, one first input port is connected to one first receive port, and one second input port is connected to one second receive port.

According to the design of the full-duplex communication apparatus provided in this embodiment of this application, the power splitting module can allocate power to to-be-sent signals based on a relationship C, provided that it is ensured that the L different elements in the second scattering parameter matrix are C times the L different elements in the first scattering parameter matrix. For example, a power of a signal (a first signal shown below) sent through an antenna may be C times a power of a signal (a second signal shown below) sent through an interference cancellation module. Therefore, a power loss of a sent signal is reduced, a power of the sent signal (for example, the first signal) is effectively ensured, and efficiency of sending the signal by a transmitter is effectively ensured. In addition, according to the full-duplex communication apparatus provided in this application, the second scattering parameter matrix and the first scattering parameter matrix have a same dimension and the like provided that it is ensured that a quantity of transmit and receive ports of the antenna is consistent with that of the interference cancellation module, and positions of the transmit and receive ports of the antenna correspond to those of the interference cancellation module. Based on implementation of multi-antenna interference cancellation, implementation is simple, hardware complexity can be further improved, and a volume of the interference cancellation module can be further reduced.

In a possible implementation, the L different elements are in a same row or a same column.

For example, L is a positive integer less than or equal to $N_1$, or L is a positive integer less than or equal to $N_2$.

In a possible implementation, the L different elements include all elements in an $m^{th}$ row or an $n^{th}$ column, where m is a positive integer, and n is a positive integer.

For example, any element in an $m^{th}$ row in the second scattering parameter matrix is C times an element in a corresponding position in an $m^{th}$ row in the first scattering parameter matrix, or any element in an $n^{th}$ column in the second scattering parameter matrix is C times an element in a corresponding position in an $n^{th}$ column in the first scattering parameter matrix.

For example, L is equal to $N_1$, or L is equal to $N_2$.

In a possible implementation, the second scattering parameter matrix is C times the first scattering parameter matrix.

For example, L is equal to $N_1 * N_2$.

In this embodiment of this application, compared with a transmission line, a spatially coupled transmission manner effectively improves use of a large quantity of power splitting modules and combiner modules, and effectively reduces hardware complexity. In addition, because the second scattering parameter matrix is C times the first scattering parameter matrix, it not only effectively implements that the power of the first signal can be greater than the power of the second signal, so that a power loss of the to-be-sent signal is effectively reduced, but also effectively ensures an interference cancellation effect.

In a possible implementation, the modulus of C is greater than or equal to 10.

In this embodiment of this application, when the modulus of C is equal to 10, the power of the to-be-sent signal is lost by only -20 dB (that is, only 1% is lost). That is, a problem that the power of the to-be-sent signal is excessively distributed due to existence of the interference cancellation module is effectively alleviated, thereby effectively reducing impact of the interference cancellation module on the power of the to-be-sent signal, and ensuring the power of the first signal sent through the antenna.

In a possible implementation, each of the second transmit ports includes $M_1$ transmit subports, and each of the second receive ports includes $M_2$ receive subports, where $M_1$ is a positive integer, and $M_2$ is a positive integer; the interference cancellation module further includes at least one of the following: a plurality of first adjustment modules or a plurality of second adjustment modules, each of the transmit subports corresponds to one first adjustment module, and each of the receive subports corresponds to one second adjustment module; and the first adjustment module is configured to: after adjusting at least one of an amplitude or a phase of a signal, input the adjusted signal to a corresponding transmit subport, and the second adjustment module is configured to adjust at least one of an amplitude or a phase of a cancellation signal input to a corresponding receive subport, so that the L different elements in the second scattering parameter matrix are C times the L different elements in the first scattering parameter matrix.

In this embodiment of this application, the interference cancellation module may include the plurality of first adjustment modules, for example, $M_1 * N_1$ first adjustment modules; include the plurality of second adjustment modules, for example, $M_2 * N_2$ first adjustment modules; or include the plurality of (for example, $M_1 * N_1$) first adjustment modules and the plurality of (for example, $M_2 * N_2$) second adjustment modules. In this embodiment of this application, that the L different elements in the second scattering parameter matrix are C times the L different elements in the first scattering parameter matrix can be effectively ensured by adjusting at least one of an amplitude or a phase of a signal corresponding to the transmit subport or the receive subport.

In a possible implementation, first adjustment modules corresponding to transmit subports at corresponding positions in all of the second transmit ports have a same amplitude and a same phase, or second adjustment modules corresponding to receive subports at corresponding positions in all of the second receive ports have a same amplitude and a same phase.

For example, the first adjustment modules corresponding to the transmit subports at the corresponding positions in all of the second transmit ports have the same amplitude and the same phase, and the second adjustment modules corresponding to the receive subports at the corresponding positions in the second receive ports have the same amplitude and the same phase.

In a possible implementation, $N_1$ is equal to $N_2$.

Usually, placing positions in the antenna have specific regularity. For different transmit and receive ports, formed interference signals are the same if relative positions thereof are the same. For example, most elements in the first scattering parameter matrix (or the second scattering parameter matrix) may be the same when $N_1 = N_2$. For example, when $N_1 = N_2$, to enable the first scattering parameter matrix and the second scattering parameter matrix to meet a specific linear relationship, there is no need to learn of an element at each corresponding position, provided that N different elements are C times. Therefore, calculation complexity is further effectively improved.

In a possible implementation, the second scattering parameter matrix and the first scattering parameter matrix meet the following relationship:

$$\begin{pmatrix} S_{1,1} & S_{1,2} & \cdots & S_{1,N} \\ S_{2,1} & S_{2,2} & \cdots & S_{2,N} \\ \vdots & \vdots & \ddots & \vdots \\ S_{N,1} & S_{N,2} & \cdots & S_{N,N} \end{pmatrix} = C * \begin{pmatrix} S_{1,1}^{ANT} & S_{1,2}^{ANT} & \cdots & S_{1,N}^{ANT} \\ S_{2,1}^{ANT} & S_{2,2}^{ANT} & \cdots & S_{2,N}^{ANT} \\ \vdots & \vdots & \ddots & \vdots \\ S_{N,1}^{ANT} & S_{N,2}^{ANT} & \cdots & S_{N,N}^{ANT} \end{pmatrix}.$$

$S_{i,k}$ represents a scattering parameter between an $i^{th}$ second receive port and a $k^{th}$ second transmit port, $S_{i,k}^{ANT}$ represents a scattering parameter between an $i^{th}$ first receive port and a $k^{th}$ first transmit port, i is an integer less than or equal to N and greater than or equal to 2, k is an integer less than or equal to N and greater than or equal to 2, N represents a quantity of the first transmit ports, and the quantity of the first transmit ports is equal to a quantity of the first receive ports.

In a possible implementation, $S_{i,k}$ meets the following relationship:

$$S_{i,k} = \begin{pmatrix} S_{i,1;k,1} & S_{i,1;k,2} & \cdots & S_{i,1;k,M} \\ S_{i,2;k,1} & S_{i,2;k,2} & \cdots & S_{i,2;k,M} \\ \vdots & \vdots & \ddots & \vdots \\ S_{i,M;k,1} & S_{i,M;k,2} & \cdots & S_{i,M;k,M} \end{pmatrix} \begin{pmatrix} a_1 \\ a_2 \\ \vdots \\ a_M \end{pmatrix};$$

$$S_{i,k} = \begin{pmatrix} b_1 & b_2 & \cdots & b_M \end{pmatrix} \begin{pmatrix} S_{i,1;k,1} & S_{i,1;k,2} & \cdots & S_{i,1;k,M} \\ S_{i,2;k,1} & S_{i,2;k,2} & \cdots & S_{i,2;k,M} \\ \vdots & \vdots & \ddots & \vdots \\ S_{i,M;k,1} & S_{i,M;k,2} & \cdots & S_{i,M;k,M} \end{pmatrix};$$

or

$$S_{i,k} = \begin{pmatrix} b_1 & b_2 & \cdots & b_M \end{pmatrix} \begin{pmatrix} S_{i,1;k,1} & S_{i,1;k,2} & \cdots & S_{i,1;k,M} \\ S_{i,2;k,1} & S_{i,2;k,2} & \cdots & S_{i,2;k,M} \\ \vdots & \vdots & \ddots & \vdots \\ S_{i,M;k,1} & S_{i,M;k,2} & \cdots & S_{i,M;k,M} \end{pmatrix} \begin{pmatrix} a_1 \\ a_2 \\ \vdots \\ a_M \end{pmatrix}.$$

Si,j;k,l represents a scattering parameter between a $j^{th}$ receive subport of the $i^{th}$ second receive port and an $l^{th}$ transmit subport of the $k^{th}$ second transmit port, where j is a positive integer less than or equal to M, 1 is a positive integer less than or equal to M, and $M_1 = M_2 = M$; and $a_M$ represents an amplitude and a phase of a first adjustment module corresponding to an $M^{th}$ transmit subport, and $b_M$ represents an amplitude and a phase of a second adjustment module corresponding to the $M^{th}$ transmit subport.

According to the designs of the first adjustment modules and the second adjustment modules provided in this embodiment of this application, an amplitude and a phase of each of the first adjustment modules and an amplitude and a phase of each of the second adjustment modules are adjusted, so that not only an interference cancellation effect is effectively improved, but also the amplitudes and the phases can be combined with scattering parameters to obtain the second scattering parameter matrix, to further ensure that the L different elements in the second scattering parameter matrix are C times the L different elements in the first scattering parameter matrix, thereby effectively reducing a power loss of the to-be-sent signal, and ensuring a power of the signal sent by the antenna.

According to a second aspect, an embodiment of this application provides a network device, where the network device includes the full-duplex communication apparatus shown in any one of the first aspect or the possible implementations of the first aspect.

For example, the network device includes a next-generation NodeB (next generation NodeB, gNB), a next-generation evolved NodeB (next generation evolved NodeB, ng-eNB), a network device in future communication, or the like.

According to a third aspect, an embodiment of this application provides a terminal device, where the terminal device includes the full-duplex communication apparatus shown in any one of the first aspect or the possible implementations of the first aspect.

For example, the terminal device includes a mobile phone, a vehicle, or the like. For example, the vehicle may be an automobile, or may be a motor vehicle in another form.

According to a fourth aspect, an embodiment of this application provides a full-duplex communication method, where the method includes:

performing power allocation on $N_1$ to-be-sent signals to obtain $N_1$ first signals and $N_1$ second signals, where a power of the first signal is C times a power of the second signal, where $N_1$ is an integer greater than or equal to 2, C is a constant, and a modulus of C is greater than 1; sending the $N_1$ first signals through $N_1$ first transmit ports, and sending the $N_1$ second signals through $N_1$ second transmit ports; receiving $N_2$ third signals through $N_2$ first receive ports, and receiving $N_2$ cancellation signals through $N_2$ second receive ports, where L different elements in a second scattering parameter matrix are C times L different elements at corresponding positions in a first scattering parameter matrix, the first scattering parameter matrix is a scattering parameter matrix between the $N_2$ first receive ports and the $N_1$ first transmit ports, and the second scattering parameter matrix is a scattering parameter matrix between the $N_2$ second receive ports and the $N_1$ second transmit ports; and a $p^{th}$ third signal in the $N_2$ third signals includes an interference signal and a signal from another communication apparatus, the interference signal includes a signal that is obtained by coupling the $N_1$ first signals sent through the $N_1$ first transmit ports and that is received through a $p^{th}$ first receive port, and a $q^{th}$ cancellation signal in the $N_2$ cancellation signals is a signal obtained by coupling the $N_1$ second signals sent through the $N_1$ second transmit ports, where $N_2$ is an integer greater than or equal to 2, p is any integer in 2, ..., and $N_2$, and q is any integer in 2, ..., and $N_2$; and combining the $N_2$ third signals and the $N_2$ cancellation signals, and outputting an interference-cancelled signal.

In a possible implementation, the L different elements are in a same row or a same column.

In a possible implementation, the L different elements include all elements in an $m^{th}$ row or an $n^{th}$ column, where m is a positive integer, and n is a positive integer.

For example, any element in an $m^{th}$ row in the second scattering parameter matrix is C times an element in a corresponding position in an $m^{th}$ row in the first scattering parameter matrix, or any element in an $n^{th}$ column in the second scattering parameter matrix is C times an element in a corresponding position in an $n^{th}$ column in the first scattering parameter matrix.

In a possible implementation, the second scattering parameter matrix is C times the first scattering parameter matrix.

In a possible implementation, the modulus of C is greater than or equal to 10.

In a possible implementation, each of the second transmit ports includes $M_1$ transmit subports, and each of the second receive ports includes $M_2$ receive subports, where $M_1$ is a positive integer, and $M_2$ is a positive integer.

The sending the $N_1$ second signals through $N_1$ second transmit ports includes: sending the $N_1$ second signals based on the $M_1$ transmit subports included in each of the second transmit ports.

The receiving $N_2$ cancellation signals through $N_2$ second receive ports includes: receiving the $N_2$ cancellation signals based on the $M_2$ receive subports included in each of the second receive ports.

In a possible implementation, each element in the second scattering parameter matrix is obtained based on a scattering parameter matrix between the $M_2$ receive subports and the $M_1$ transmit subports and an amplitude and a phase of a first adjustment module corresponding to each of the receive subports.

In a possible implementation, each element in the second scattering parameter matrix is obtained based on a scattering parameter matrix between the $M_2$ receive subports and the $M_1$ transmit subports and an amplitude and a phase of a second adjustment module corresponding to each of the transmit subports.

In a possible implementation, each element in the second scattering parameter matrix is obtained based on a scattering parameter matrix between the $M_2$ receive subports and the $M_1$ transmit subports, an amplitude and a phase of a first adjustment module corresponding to each of the receive subports, and an amplitude and a phase of a second adjustment module corresponding to each of the transmit subports.

In a possible implementation, first adjustment modules corresponding to transmit subports at corresponding positions in all of the second transmit ports have a same amplitude and a same phase, or second adjustment modules corresponding to receive subports at corresponding positions in all of the second receive ports have a same amplitude and a same phase.

In a possible implementation, $N_1$ is equal to $N_2$.

In a possible implementation, the second scattering parameter matrix and the first scattering parameter matrix meet the following relationship:

$$\begin{pmatrix} S_{1,1} & S_{1,2} & \cdots & S_{1,N} \\ S_{2,1} & S_{2,2} & \cdots & S_{2,N} \\ \vdots & \vdots & \ddots & \vdots \\ S_{N,1} & S_{N,2} & \cdots & S_{N,N} \end{pmatrix} = C * \begin{pmatrix} S_{1,1}^{ANT} & S_{1,2}^{ANT} & \cdots & S_{1,N}^{ANT} \\ S_{2,1}^{ANT} & S_{2,2}^{ANT} & \cdots & S_{2,N}^{ANT} \\ \vdots & \vdots & \ddots & \vdots \\ S_{N,1}^{ANT} & S_{N,2}^{ANT} & \cdots & S_{N,N}^{ANT} \end{pmatrix}.$$

$S_{i,k}$ represents a scattering parameter between an $i^{th}$ second receive port and a $k^{th}$ second transmit port, $S_{i,k}^{ANT}$ represents a scattering parameter between an $i^{th}$ first receive port and a $k^{th}$ first transmit port, i is an integer less than or equal to N and greater than or equal to 2, k is an integer less than or equal to N and greater than or equal to 2, N represents a quantity of the first transmit ports, and the quantity of the first transmit ports is equal to a quantity of the first receive ports.

In a possible implementation, $S_{i,k}$ meets the following relationship:

$$S_{i,k} = \begin{pmatrix} S_{i,1;k,1} & S_{i,1;k,2} & \cdots & S_{i,1;k,M} \\ S_{i,2;k,1} & S_{i,2;k,2} & \cdots & S_{i,2;k,M} \\ \vdots & \vdots & \ddots & \vdots \\ S_{i,M;k,1} & S_{i,M;k,2} & \cdots & S_{i,M;k,M} \end{pmatrix} \begin{pmatrix} a_1 \\ a_2 \\ \vdots \\ a_M \end{pmatrix};$$

$$S_{i,k} = \begin{pmatrix} b_1 & b_2 & \cdots & b_M \end{pmatrix} \begin{pmatrix} S_{i,1;k,1} & S_{i,1;k,2} & \cdots & S_{i,1;k,M} \\ S_{i,2;k,1} & S_{i,2;k,2} & \cdots & S_{i,2;k,M} \\ \vdots & \vdots & \ddots & \vdots \\ S_{i,M;k,1} & S_{i,M;k,2} & \cdots & S_{i,M;k,M} \end{pmatrix};$$

or

$$S_{i,k} = \begin{pmatrix} b_1 & b_2 & \cdots & b_M \end{pmatrix} \begin{pmatrix} S_{i,1;k,1} & S_{i,1;k,2} & \cdots & S_{i,1;k,M} \\ S_{i,2;k,1} & S_{i,2;k,2} & \cdots & S_{i,2;k,M} \\ \vdots & \vdots & \ddots & \vdots \\ S_{i,M;k,1} & S_{i,M;k,2} & \cdots & S_{i,M;k,M} \end{pmatrix} \begin{pmatrix} a_1 \\ a_2 \\ \vdots \\ a_M \end{pmatrix}.$$

$S_{i,j;k,l}$ represents a scattering parameter between a $j^{th}$ receive subport of the $i^{th}$ second receive port and an $l^{th}$ transmit subport of the $k^{th}$ second transmit port, where j is a positive integer less than or equal to M, 1 is a positive integer less than or equal to M, and $M_1 = M_2 = M$; and $a_M$ represents an amplitude and a phase of a first adjustment module corresponding to an $M^{th}$ transmit subport, and $b_M$ represents an amplitude and a phase of a second adjustment module corresponding to the $M^{th}$ transmit subport.

According to a fifth aspect, an embodiment of this application provides a computer-readable storage medium, where the computer-readable storage medium is configured to store a computer program; when the computer program is executed, the method shown in any one of the first aspect or the possible implementations of the first aspect is performed.

For example, when the computer program is executed by one or more processors, a power splitting module may be enabled to allocate power to to-be-sent signals based on a C:1 relationship. For example, when the computer program is executed by one or more processors, at least one of a first adjustment module or a second adjustment module may be enabled to perform adjustment based on a corresponding amplitude and phase.

According to a sixth aspect, an embodiment of this application provides a computer program product, where the computer program product includes a computer program or computer code; when the computer program or the computer code is executed, the method shown in any one of the first aspect or the possible implementations of the first aspect is performed.

**BRIEF DESCRIPTION OF DRAWINGS**

FIG. 1 is a schematic diagram of an architecture of a communication system according to an embodiment of this application;

FIG. 2 is a schematic diagram of a structure of a full-duplex communication apparatus according to an embodiment of this application;

FIG. 3 is a schematic diagram of a structure of an interference cancellation module according to an embodiment of this application;

FIG. 4 is a schematic diagram of a structure of a full-duplex communication apparatus according to an embodiment of this application;

FIG. 5 is a schematic diagram of a structure of a dual-polarized antenna array according to an embodiment of this application;

FIG. 6 is a schematic diagram of a structure of a planar waveguide according to an embodiment of this application;

FIG. 7 is a schematic diagram of a structure of an interference cancellation module according to an embodiment of this application;

FIG. 8 is a schematic diagram of a simulation result according to an embodiment of this application;

FIG. 9 is a schematic diagram of a structure of a patch antenna according to an embodiment of this application;

FIG. 10 is a schematic diagram of a structure of an interference cancellation module according to an embodiment of this application;

FIG. 11 is a schematic diagram of a simulation result according to an embodiment of this application; and

FIG. 12 is a schematic flowchart of a full-duplex communication method according to an embodiment of this application.

## DESCRIPTION OF EMBODIMENTS

To make objectives, technical solutions, and advantages of this application clearer, the following further describes this application with reference to the accompanying drawings.

In the specification, claims, and the accompanying drawings of this application, terms such as "first" and "second" are only intended to distinguish between different objects but do not describe a particular order. In addition, terms "include", "have", or any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

An "embodiment" mentioned in this specification means that a particular feature, structure, or characteristic described with reference to this embodiment may be included in at least one embodiment of this application. The phrase shown in various positions in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of' means two or more, "at least two (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items. For example, at least one of a, b, and c may represent a, b, c, "a and b", "a and c", "b and c", or "a, b, and c".

The full-duplex communication apparatus and method provided in this application may be applied to various communication systems, which may be, for example, an internet of things (internet of things, IoT) system, a narrowband internet of things (narrowband internet of things, NB-IoT) system, a long term evolution (long term evolution, LTE) system, a 5th generation (5th-generation, 5G) communication system, and a new communication system (for example, 6G) emerging in future communication development. Optionally, the full-duplex apparatus and method provided in this application may be further applied to a wireless local area network (wireless local area network, WLAN) system, for example, wireless fidelity (wireless-fidelity, Wi-Fi).

FIG. 1 is a schematic diagram of an architecture of a communication system according to an embodiment of this application. As shown in FIG. 1, the communication system includes a network device 101 and a terminal device 102. The full-duplex communication apparatus provided in the embodiments of this application may be applied to the network device 101. Optionally, the method may be further applied to the terminal device 102. It may also be considered that the full-duplex communication apparatus may be the network device 101 or the terminal device 102.

For example, the network device may be a next-generation NodeB (next generation NodeB, gNB), a next-generation evolved NodeB (next generation evolved NodeB, ng-eNB), a network device in future 6G communication, or the like. The network device may be any device that has a wireless transceiver function, and includes but is not limited to the foregoing base station (including a base station deployed on a satellite). Alternatively, the base station may be a base station in a future communication system, for example, a sixth generation communication system. Optionally, the network device may be an access node, a wireless relay node, a wireless backhaul node, or the like in a wireless local area network (wireless-fidelity, Wi-Fi) system. Optionally, the network device may be a radio controller in a cloud radio access network (cloud radio access network, CRAN) scenario. Optionally, the network device may be a wearable device, an in-vehicle device, or the like. Optionally, the network device may be a small cell, a transmission reception node (transmission reception point, TRP) (or may be referred to as a transmission point), or the like. It may be understood that the network device may alternatively be a base station or the like in a future evolved public land mobile network (public land mobile network, PLMN).

In some deployments, the base station (for example, a gNB) may include a central unit (centralized unit, CU) and a distributed unit (distributed unit, DU). In other words, functions of the base station in an access network are split, some functions of the base station are deployed on one CU, and the remaining functions are deployed on the DU. In addition, a plurality of DUs share one CU. This can reduce costs and facilitate network expansion. In some other deployments of the base station, the CU may be further divided into a CU-control plane (control plane, CP), a CU-user plane (user plan, UP), and the like. In still some other deployments of the base station, the base station may alternatively be an open radio access network (open radio access network, ORAN) architecture or the like. A specific type of the base station is not limited in this application.

For example, the terminal device may also be referred to as user equipment (user equipment, UE), a terminal, or the like. The terminal device is a device having a wireless transceiver function, and may be deployed on land, including indoor or outdoor, handheld, wearable, or in-vehicle; may be deployed on water, for example, on a ship; or may be deployed in the air, for example, on an airplane or a balloon. The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medicine (remote medical), a wireless terminal in a smart grid (smart grid), a wireless terminal in transportation safety (transportation safety), a wireless terminal in a smart city (smart city), a wireless terminal in a smart home, or the like. It may be understood that the terminal device may alternatively be a terminal device in a future 6G network, a terminal device in a future evolved PLMN, or the like.

It may be understood that the terminal device shown in this application may not only include a vehicle (for example, an automobile) in the internet of vehicles, but also include an in-vehicle device, an in-vehicle terminal, or the like in the internet of vehicles. A specific form of the terminal device applied to the internet of vehicles is not limited in this application.

The network architecture and the service scenario described in the embodiments of this application are intended to describe the technical solutions in the embodiments of this application more clearly, and do not constitute a limitation on the technical solutions provided in the embodiments of this application. A person of ordinary skill in the art may know that: With the evolution of the network architecture and the emergence of new service scenarios, the technical solutions provided in the embodiments of this application are also applicable to similar technical problems.

The full-duplex communication apparatus and method provided in the embodiments of this application may be applied to a multi-antenna full-duplex communication scenario. A multi-antenna application scenario may include, for example, a multiple-input multiple-output (multi-input multi-output, MIMO) technology, or a massive multiple-input multiple-output massive-MIMO technology.

FIG. 2 is a schematic diagram of a structure of a full-duplex communication apparatus according to an embodiment of this application. As shown in FIG. 2, the full-duplex communication apparatus includes an antenna 201, an interference cancellation module 202, a power splitting module 203, and a combiner module 204.

The antenna 201 includes $N_1$ first transmit ports and $N_2$ first receive ports, where $N_1$ is an integer greater than or equal to 2, and $N_2$ is an integer greater than or equal to 2. For example, the antenna may be a transmit/receive separated antenna, or a transmit/receive integrated antenna. Optionally, $N_1$ is equal to $N_2$. Optionally, $N_1$ and $N_2$ may not be equal. For example, a dual-polarized antenna array may be the transmit/receive integrated antenna, and for example, $N_1$ is equal to $N_2$. For another example, a patch antenna may be the transmit/receive separated antenna, and for example, $N_1$ is equal to $N_2$, or $N_1$ and $N_2$ may be unequal.

It may be understood that a first transmit port in FIG. 2 is denoted as Tx1, and the first transmit port may be understood as a port for sending a signal; and a first receive port is denoted as Rx1, and the first receive port may be understood as a port for receiving a signal. As shown in FIG. 2, the antenna 201 includes the $N_1$ first transmit ports and the $N_2$ first receive ports. In this embodiment of this application, the antenna is described by using the transmit port and the receive port, but a specific form of the antenna is not limited.

The power splitting module 203 includes $N_1$ first output ports and $N_1$ second output ports, where the first output ports are one-to-one connected to the first transmit ports, and the second output ports are one-to-one connected to the second transmit ports. For example, the power splitting module may be configured to perform power allocation on a signal. For example, the power splitting module may be an unequal power splitter, a coupler, or the like. It may be understood that a connection relationship between the power splitting module 203 and the antenna 201 and a connection relationship between the power splitting module 203 and the interference cancellation module 202 shown in FIG. 2 are merely examples. During specific implementation, the power splitting module 203 and the antenna 201 may be connected in a coupling manner, and the power splitting module 203 and the interference cancellation module 202 may also be connected in a coupling manner. In this embodiment of this application, a connection manner between the power splitting module 203 and the antenna 201 and a connection manner between the power splitting module 203 and the interference cancellation module 202 are not limited. It may be understood that, in this embodiment of this application, whether another component is included between the power splitting module and the antenna or between the power splitting module and the interference cancellation module is not limited.

The combiner module 204 includes $N_2$ first input ports and $N_2$ second input ports, where the first input ports are one-to-one connected to the first receive ports, and the second input ports are one-to-one connected to the second receive ports. For example, the combiner module may be configured to combine signals. For example, the combiner module may be a combiner. It may be understood that a connection relationship between the combiner module 204 and the antenna 201 and a connection relationship between the combiner module 204 and the interference cancellation module 202 shown in FIG. 2 are merely examples. During specific implementation, the combiner module 204 and the antenna 201 may be connected in a coupling manner, and the combiner module 204 and the interference cancellation module 202 may also be connected in a coupling manner. In this embodiment of this application, a connection manner between the combiner module 204 and the antenna 201 and a connection manner between the combiner module 204 and the interference cancellation module 202 are not limited. It may be understood that, in this embodiment of this application, whether another component is included between the combiner module and the antenna or between the combiner module and the interference cancellation module is not limited.

The interference cancellation module 202 includes $N_1$ second transmit ports and $N_2$ second receive ports. It may be understood that the second transmit port in FIG. 2 is denoted as Tx2, and the second transmit port may be understood as a port for sending a signal; and the second receive port is denoted as Rx2, and the second receive port may be understood as a port for receiving a signal. It may be understood that the interference cancellation module may be understood as a closed network. The interference cancellation module does not transmit a signal to the outside even if the interference cancellation module receives a second signal. Optionally, the interference cancellation module also does not receive a signal sent by another apparatus.

As shown in FIG. 2, the interference cancellation module 202 includes the $N_1$ second transmit ports and the $N_2$ second receive ports. A positional relationship between the second transmit port and the second receive port in the interference cancellation module needs to be determined based on a position of the first transmit port and a position of the first receive port. In other words, a quantity and positions of the second transmit ports correspond to a quantity and positions of the first transmit ports, and a quantity and positions of the second receive ports correspond to a quantity and positions of the first receive ports. Therefore, it is ensured that L different elements in a second scattering parameter matrix and L different elements in a first scattering parameter matrix meet a linear relationship. For example, it is ensured that the second scattering parameter matrix and the first scattering parameter matrix have same symmetry. The second scattering parameter matrix is a scattering parameter matrix between the $N_2$ second receive ports and the $N_1$ second transmit ports, and the first scattering parameter matrix is a scattering parameter matrix between the $N_2$ first receive ports and the $N_1$ first transmit ports. For specific descriptions of the first scattering parameter matrix and the second scattering parameter matrix, refer to the following. Details are not described herein.

Further, each of the second transmit ports may include $M_1$ transmit subports, and each of the second receive ports may include $M_2$ receive subports, where $M_1$ is a positive integer, and $M_2$ is a positive integer.

In this embodiment of this application, at least one of amplitudes or phases of signals corresponding to the $M_1$ transmit subports and at least one of amplitudes or phases of signals corresponding to the $M_2$ receive subports are adjusted, to ensure that the L different elements in the second scattering parameter matrix are C times the L different elements in the first scattering parameter matrix, where C is a constant, a modulus of C is greater than 1, and L is a positive integer less than or equal to $N_1 * N_2$. That is, at least one of an amplitude or a phase of a signal corresponding to each of the $M_1$ transmit subports corresponding to each of the second transmit ports, and at least one of an amplitude or a phase of a signal corresponding to each of the $M_2$ receive subports corresponding to each of the second receive ports are adjusted, to implement that the L different elements in the second scattering parameter matrix are C times the L different elements in the first scattering parameter matrix.

In a possible implementation, each of the transmit subports corresponds to one first adjustment module, and each of the receive subports corresponds to one second adjustment module. For example, the first adjustment module may be an adjustable phase shifter, an adjustable attenuator, or an integrated adjustable phase shifter and adjustable attenuator, and the like. The second adjustment module may be an adjustable phase shifter, an adjustable attenuator, or an integrated adjustable phase shifter and adjustable attenuator. For example, the first adjustment module is configured to adjust at least one of an amplitude or a phase of a signal, and then input the adjusted signal to a corresponding transmit subport. For example, the second adjustment module is configured to adjust at least one of an amplitude or a phase of a cancellation signal input to a corresponding receive subport. At least one of the first adjustment module or the second adjustment module is used, so that the L different elements in the second scattering matrix can be C times the L different elements in the first scattering matrix. For example, first adjustment modules corresponding to transmit subports at corresponding positions in all of the second transmit ports have a same amplitude and a same phase. For example, second adjustment modules corresponding to receive subports at corresponding positions in all of the second receive ports have a same amplitude and a same phase.

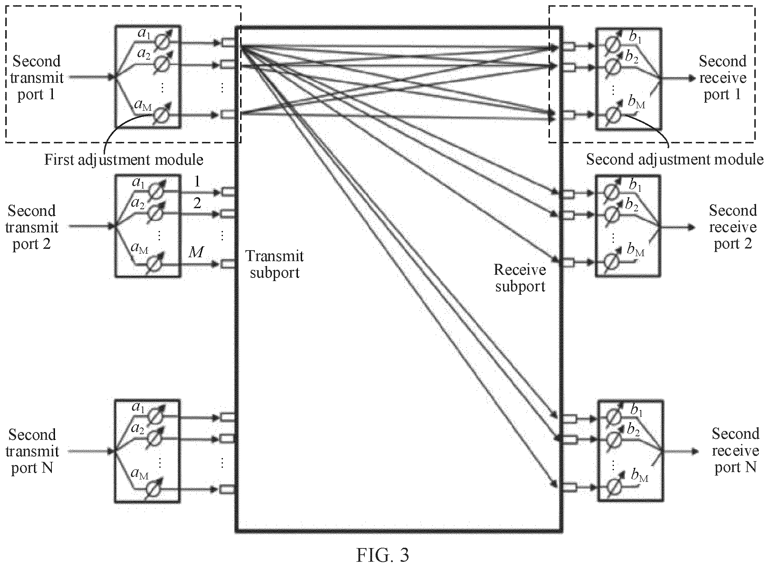

In a possible implementation, FIG. 3 is a schematic diagram of a structure of an interference cancellation module according to an embodiment of this application. It may be understood that, for ease of description, FIG. 3 is shown by using an example in which $M_1 = M_2 = M$ and $N_1 = N_2 = N$. In other words, FIG. 3 is shown by using an example in which a quantity of first transmit ports and a quantity of second transmit ports are both equal to N, a quantity of first receive ports and a quantity of second receive ports are both equal to N, and a quantity of transmit subports and a quantity of receive subports are both equal to M. However, this should not be construed as a limitation on this embodiment of this application. As shown in FIG. 3, each transmit subport corresponds to one first adjustment module, and each receive subport corresponds to one second adjustment module. For example, an amplitude and a phase of a first adjustment module corresponding to a first transmit subport in a second transmit port 1, an amplitude and a phase of a first adjustment module corresponding to a first transmit subport in a second transmit port 2, ..., and an amplitude and a phase of a first adjustment module corresponding to a first transmit subport (for example, the transmit subport 1 shown in FIG. 3) in a second transmit port N are all $a_1$ (complex number). For example, an amplitude and a phase of a second adjustment module corresponding to a first receive subport in a second receive port 1, an amplitude and a phase of a second adjustment module corresponding to a first receive subport in a second receive port 2, ..., and an amplitude and a phase of a second adjustment module corresponding to a first receive subport in a second receive port N are all $b_1$ (complex number). It may be understood that for descriptions of $a_2$, ..., $a_M$, $b_2$, ..., and $b_M$, refer to $a_1$ or $b_1$ described above. Details are not described in this embodiment of this application again. It may be understood that a left dashed line part shown in FIG. 3 may be represented as the second transmit port, and a right dashed line part may be represented as the second receive port. For ease of understanding, FIG. 3 merely provides an example of a dashed-line box of one second transmit port and a dashed-line box of one second receive port.

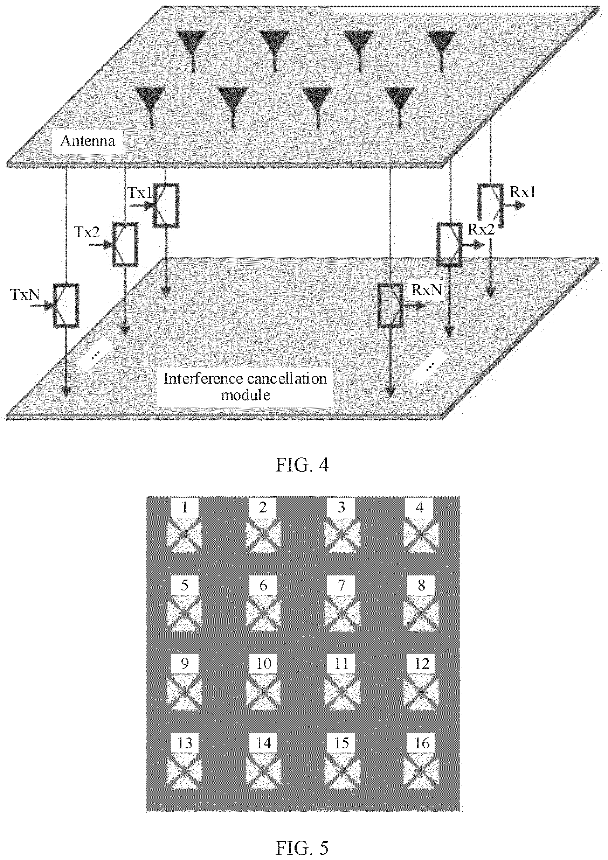

FIG. 4 is a schematic diagram of a structure of a full-duplex communication apparatus according to an embodiment of this application. It may be understood that FIG. 4 is shown by using an example in which $N_1 = N_2 = N = 8$. For a specific structure of an interference cancellation module, refer to FIG. 3. Details are not described herein again. Tx1, Tx2, ..., and TxN shown in FIG. 4 may be understood as input ports of a power splitting module, that is, signals input to the power splitting module include N signals (for example, N to-be-sent signals). Rx1, Rx2, ..., and RxN shown in FIG. 4 may be understood as output ports of a combiner module, that is, signals output from the combiner module include N interference-cancelled signals. As shown in FIG. 4, a structure of an antenna and a structure of the interference cancellation module may be symmetric, to ensure that a second scattering parameter matrix and a first scattering parameter matrix have a same dimension. It may be understood that for specific descriptions of FIG. 4, refer to FIG. 2 or FIG. 3. Details are not described herein again.

In this embodiment of this application, a quantity of first transmit ports is consistent with a quantity of second transmit ports, a quantity of first receive ports is consistent with a quantity of second receive ports, and positions of the first transmit ports and the first receive ports correspond to positions of the second transmit ports and the second receive ports, so that the second scattering parameter matrix and the first scattering parameter matrix have the same dimension and have symmetry. In addition, each of the second transmit ports is extended to a plurality of transmit subports, each of the second receive ports is extended to a plurality of receive subports, and at least one of an amplitude or a phase of a signal corresponding to each of the transmit subports and an amplitude or a phase of a signal corresponding to each of the receive subports is adjustable (that is, at least one of an amplitude or a phase of the transmit subport and an amplitude or a phase of the receive subport may be adjusted), so that L different elements in the second scattering parameter matrix are C times L different elements in the first scattering parameter matrix, where $|C| > 1$ (indicating that a modulus of C is greater than 1). It may be understood that, for specific descriptions about that the L different elements in the second scattering parameter matrix are C times the L different elements in the first scattering parameter matrix, refer to the following. Details are not described herein again.

In this embodiment of this application, the antenna and the interference cancellation module in the full-duplex communication apparatus are designed, so that an interference cancellation effect can be effectively improved. This application effectively ensures that the L different elements in the second scattering parameter matrix are C times the L different elements in the first scattering parameter matrix. Therefore, when the power splitting module allocates power to the to-be-sent signals, a power of a first signal may be C times a power of a second signal. For example, the interference cancellation effect depends on symmetry between the first scattering parameter matrix and the second scattering parameter matrix. Higher symmetry indicates a better interference cancellation effect. Optionally, in this application, it may be designed that a physical structure and a size of the antenna correspond to those of the interference cancellation module. This requires higher machining accuracy. However, even if the physical structures and sizes of the antenna and the interference cancellation module are different, it is possible that the first scattering parameter matrix and the second scattering parameter matrix can still implement symmetry, approximate symmetry, or the like.

With reference to the structure shown in FIG. 2 or FIG. 3, the following describes in detail an operating principle of a full-duplex apparatus provided in this application.

The following describes the L different elements in detail.

It should be first noted that the first scattering parameter matrix and the second scattering parameter matrix have a same dimension, and positions of the L different elements in the first scattering parameter matrix are correspondingly the same as positions of the L different elements in the second scattering parameter matrix. For example, both the first scattering parameter matrix and the second scattering parameter matrix include four rows and four columns, and the positions of the L different elements in the first scattering parameter matrix are a first row and a first column, and the first row and a second column. In this case, the positions of the L different elements in the second scattering parameter matrix are also a first row and a first column, and the first row and a second column. There may be the following different manners in which the L different elements in the second scattering parameter matrix are C times the L different elements in the first scattering parameter matrix:

1. The L different elements are not in a same row or column.

For example, the L different elements in the second scattering parameter matrix include $S_{1,1}$, $S_{2,2}$, and $S_{3,3}$. The L different elements in the first scattering parameter matrix include $S_{1,1}^{ANT}$, $S_{2,2}^{ANT}$, and $S_{3,3}^{ANT}$. For example, L may be a positive integer less than or equal to $N_1 * N_2$.

2. The L different elements are in a same row or column.

For example, the L different elements in the second scattering parameter matrix include $S_{1,1}$, $S_{1,2}$, and $S_{1,3}$. The L different elements in the first scattering parameter matrix include $S_{1,1}^{ANT}$, $S_{1,2}^{ANT}$, and $S_{1,2}^{ANT}$. For example, L may be a positive integer less than or equal to $N_1$. For example, L may be a positive integer less than or equal to $N_2$.

For example, interference of one or more first transmit ports in the antenna to some first receive ports may be relatively small. Similarly, interference of one or more second transmit ports in the interference cancellation module to some second receive ports is also relatively small. Therefore, the full-duplex communication apparatus in this application only needs to ensure that the L different elements are in the same row or column, so that the power of the first signal is C times the power of the second signal, and the modulus of C is greater than 1. Therefore, a power loss of the to-be-sent signal is effectively reduced.

3. The L different elements include all elements in an $m^{th}$ row or an $n^{th}$ column.

For example, any element in an $m^{th}$ row in the second scattering parameter matrix is C times an element in a corresponding position in an $m^{th}$ row in the first scattering parameter matrix, or any element in an $n^{th}$ column in the second scattering parameter matrix is C times an element in a corresponding position in an $n^{th}$ column in the first scattering parameter matrix, m is a positive integer, and n is a positive integer.

For example, $S_{1,1}$ is located in a first row and a first column. Therefore, any element in the first row (or the first column) in which $S_{1,1}$ is located is C times an element in a corresponding position in the first scattering parameter matrix.

For example, $S_{1,1}$ is C times $S_{1,1}^{ANT}$, $S_{1,2}$ is C times $S_{1,2}^{ANT}$, $S_{1,3}$ is C times $S_{1,3}^{ANT}$, ..., and $S_{1,N_1}$ is C times $S_{1,N_1}^{ANT}$.

For another example, Si,i is C times $S_{1,1}^{ANT}$, $S_{2,1}$ is C times $S_{2,1}^{ANT}$, $S_{3,1}$ is C times $S_{3,1}^{ANT}$, ..., and $S_{N_1,1}$ is C times $S_{N_1,1}^{ANT}$. For example, L = $N_1$, or L = $N_2$.

4. The second scattering parameter matrix is C times the first scattering parameter matrix.

In this embodiment of this application, the first scattering parameter matrix is obtained based on the L different elements, and the second scattering parameter matrix is obtained based on the L different elements. For example, another element in the first scattering parameter matrix may be obtained based on the L different elements, and another element in the second scattering parameter matrix may be obtained based on the L different elements.

For ease of description, the following describes an operating principle of this embodiment of this application by using an example in which the second scattering parameter matrix is C times the first scattering parameter matrix.

FIG. 2 is used as an example. The power splitting module performs power allocation on the $N_1$ to-be-sent signals to obtain $N_1$ first signals and $N_1$ second signals. The power of the first signal may be C times the power of the second signal. The $N_1$ first signals are sent through the $N_1$ first transmit ports, and the $N_1$ second signals are sent through the $N_1$ second transmit ports.

For example, the first signal is coupled (which may also be understood as leakage) to the first receive port when the first transmit port sends the first signal. For example, the first signal is coupled to the $N_2$ first receive ports when a 1st first transmit port of the antenna sends the first signal. To be specific, when the $N_1$ first transmit ports of the antenna send the $N_1$ first signals, the $N_1$ first signals are coupled to the $N_2$ first receive ports, causing interference to the $N_2$ first receive ports, and forming interference signals. Therefore, the Nz first receive ports receive the interference signals obtained by coupling the $N_1$ first signals.

For example, when the $N_1$ second transmit ports of the interference cancellation module send the $N_1$ second signals, the $N_1$ second signals are coupled to the $N_2$ second receive ports, causing interference to the $N_2$ second receive ports, and forming interference signals (where the interference signal is referred to as a cancellation signal in this application). Therefore, the $N_2$ second receive ports receive the cancellation signal obtained by coupling the $N_1$ second signals.

In this embodiment of this application, because the quantity of the first transmit ports is the same as the quantity of the second transmit ports, the positions of the first transmit ports correspond to the positions of the second transmit ports, the quantity of the first receive ports is the same as the quantity of the second receive ports, and the positions of the first receive ports correspond to the positions of the second receive ports, a relationship between a power of an interference signal and a power of a cancellation signal may be obtained based on a relationship between the power of the first signal and the power of the second signal.

For example, the second scattering parameter matrix may be shown in Formula (1) below:

$$
\begin{pmatrix}
S_{1,1} & S_{1,2} & \cdots & S_{1,N_1} \\
S_{2,1} & S_{2,2} & \cdots & S_{2,N_1} \\
\vdots & \vdots & \ddots & \vdots \\
S_{N_2,1} & S_{N_2,2} & \cdots & S_{N_2,N_1}
\end{pmatrix} \quad (1)
$$

$S_{i,k}$ represents a scattering parameter between an $i^{th}$ second receive port and a $k^{th}$ second transmit port, i is a positive integer greater than or equal to 2 and less than or equal to $N_2$, and k is a positive integer greater than or equal to 2 and less than or equal to $N_1$.

For ease of description, the following uses the interference cancellation module shown in FIG. 3 as an example to describe the second scattering parameter matrix.

For example, the scattering parameter $S_{i,k}$ between the $i^{th}$ second receive port and the $k^{th}$ second transmit port may meet any one of Formula (2), Formula (3), or Formula (4) below:

$$
S_{i,k} = \begin{pmatrix}
S_{i,1;k,1} & S_{i,1;k,2} & \cdots & S_{i,1;k,M} \\
S_{i,2;k,1} & S_{i,2;k,2} & \cdots & S_{i,2;k,M} \\
\vdots & \vdots & \ddots & \vdots \\
S_{i,M;k,1} & S_{i,M;k,2} & \cdots & S_{i,M;k,M}
\end{pmatrix}
\begin{pmatrix}
a_1 \\
a_2 \\
\vdots \\
a_M
\end{pmatrix} \quad (2)
$$

$S_{i,j;k,l}$ represents a scattering parameter between a $j^{th}$ receive subport of the $i^{th}$ second receive port and an $l^{th}$ transmit subport of the $k^{th}$ second transmit port. $a_M$ represents an amplitude and a phase of the $M^{th}$ transmit subport. For example, $a_M$ may be a complex number.

$$
S_{i,k} = \begin{pmatrix} b_1 & b_2 & \cdots & b_M \end{pmatrix}
\begin{pmatrix}
S_{i,1;k,1} & S_{i,1;k,2} & \cdots & S_{i,1;k,M} \\
S_{i,2;k,1} & S_{i,2;k,2} & \cdots & S_{i,2;k,M} \\
\vdots & \vdots & \ddots & \vdots \\
S_{i,M;k,1} & S_{i,M;k,2} & \cdots & S_{i,M;k,M}
\end{pmatrix} \quad (3)
$$

$b_M$ represents an amplitude and a phase of the $M^{th}$ transmit subport. For example, $b_M$ may be a complex number.

$$S_{i,k} = (b_1 \quad b_2 \quad \cdots \quad b_M) \begin{pmatrix} S_{i,1;k,1} & S_{i,1;k,2} & \cdots & S_{i,1;k,M} \\ S_{i,2;k,1} & S_{i,2;k,2} & \cdots & S_{i,2;k,M} \\ \vdots & \vdots & \ddots & \vdots \\ S_{i,M;k,1} & S_{i,M;k,2} & \cdots & S_{i,M;k,M} \end{pmatrix} \begin{pmatrix} a_1 \\ a_2 \\ \vdots \\ a_M \end{pmatrix} \quad (4)$$

Formula (2) indicates that the second scattering parameter matrix can be C times the first scattering parameter matrix by adjusting at least one of an amplitude or a phase of a signal corresponding to each of transmit subports corresponding to each of the second transmit ports. Alternatively, Formula (2) may be understood as that each of the second receive ports may not correspond to a receive subport. Alternatively, Formula (2) may be understood as that receive subports corresponding to each of the second receive ports have a same amplitude and a same phase.

Formula (3) indicates that the second scattering parameter matrix can be C times the first scattering parameter matrix by adjusting at least one of an amplitude or a phase of a signal corresponding to each of receive subports corresponding to each of the second receive ports. Alternatively, Formula (3) may be understood as that each of the second transmit ports may not correspond to a transmit subport. Alternatively, Formula (3) may be understood as that transmit subports corresponding to each of the second transmit ports have a same amplitude and a same phase.

For example, the first scattering parameter matrix may be shown in Formula (5) below:

$$\begin{pmatrix} S_{1,1}^{ANT} & S_{1,2}^{ANT} & \cdots & S_{1,N_1}^{ANT} \\ S_{2,1}^{ANT} & S_{2,2}^{ANT} & \cdots & S_{2,N_1}^{ANT} \\ \vdots & \vdots & \ddots & \vdots \\ S_{N_2,1}^{ANT} & S_{N_2,2}^{ANT} & \cdots & S_{N_2,N_1}^{ANT} \end{pmatrix} \quad (5)$$

$S_{i,k}^{ANT}$ represents a scattering parameter between an $i^{th}$ first receive port and a $k^{th}$ first transmit port, i is a positive integer greater than or equal to 2 and less than or equal to $N_2$, and k is a positive integer greater than or equal to 2 and less than or equal to $N_1$.

For example, the second scattering parameter matrix and the first scattering parameter matrix meet Formula (6) below:

$$\begin{pmatrix} S_{1,1} & S_{1,2} & \cdots & S_{1,N_1} \\ S_{2,1} & S_{2,2} & \cdots & S_{2,N_1} \\ \vdots & \vdots & \ddots & \vdots \\ S_{N_2,1} & S_{N_2,2} & \cdots & S_{N_2,N_1} \end{pmatrix} = C * \begin{pmatrix} S_{1,1}^{ANT} & S_{1,2}^{ANT} & \cdots & S_{1,N_1}^{ANT} \\ S_{2,1}^{ANT} & S_{2,2}^{ANT} & \cdots & S_{2,N_1}^{ANT} \\ \vdots & \vdots & \ddots & \vdots \\ S_{N_2,1}^{ANT} & S_{N_2,2}^{ANT} & \cdots & S_{N_2,N_1}^{ANT} \end{pmatrix} \quad (6)$$

In this embodiment of this application, compared with a transmission line, a spatially coupled transmission manner effectively improves use of a large quantity of power splitting modules and combiner modules, and effectively reduces hardware complexity. In addition, because the second scattering parameter matrix is C times the first scattering parameter matrix, it not only effectively implements that the power of the first signal can be greater than the power of the second signal, so that a power loss of the to-be-sent signal is effectively reduced, but also effectively ensures an interference cancellation effect.

For example, when $N_1 = N_2 = N$, that is, quantities of transmit and receive ports of the antenna are the same, quantities of transmit and receive ports of the interference cancellation module are the same. The second scattering parameter matrix and the first scattering parameter matrix meet Formula (7) below:

$$\begin{pmatrix} S_{1,1} & S_{1,2} & \cdots & S_{1,N} \\ S_{2,1} & S_{2,2} & \cdots & S_{2,N} \\ \vdots & \vdots & \ddots & \vdots \\ S_{N,1} & S_{N,2} & \cdots & S_{N,N} \end{pmatrix} = C * \begin{pmatrix} S_{1,1}^{ANT} & S_{1,2}^{ANT} & \cdots & S_{1,N}^{ANT} \\ S_{2,1}^{ANT} & S_{2,2}^{ANT} & \cdots & S_{2,N}^{ANT} \\ \vdots & \vdots & \ddots & \vdots \\ S_{N,1}^{ANT} & S_{N,2}^{ANT} & \cdots & S_{N,N}^{ANT} \end{pmatrix} \quad (7)$$

Usually, placing positions in the antenna have specific regularity. For different transmit and receive ports, formed interference signals are the same if relative positions thereof are the same. Therefore, in Formula (5), most elements in the first scattering parameter matrix have a same value. For example, all elements on a diagonal of the matrix in Formula (5) may be equal, for example, $S_{1,1}^{ANT} = S_{2,2}^{ANT} = \cdots = S_{N,N}^{ANT}$ ; $S_{1,2}^{ANT} = S_{2,3}^{ANT} = \cdots = S_{N-1,N}^{ANT}$ ; and

$S_{1,3}^{ANT} = S_{2,4}^{ANT} = \cdots = S_{N-2,N}^{ANT}$ . In addition, the matrix in Formula (5) may be a symmetric matrix, for example,

$S_{1,2}^{ANT} = S_{2,1}^{ANT}$ ; $S_{1,3}^{ANT} = S_{3,1}^{ANT}$ ; and $S_{2,3}^{ANT} = S_{3,2}^{ANT}$ . Therefore, N different interference signals may need to be considered (which may also be understood as that N different scattering parameters need to be considered). If placing positions of the receive and transmit ports in the interference cancellation module are consistent with placing positions of the receive and transmit ports in the antenna, the first scattering parameter matrix and the second scattering parameter matrix have same symmetry. To enable the first scattering parameter matrix and the second scattering parameter matrix to meet a specific linear relationship, there is no need to learn of an element at each corresponding position, provided that N different elements are C times, as shown in Formula (8) and Formula (9) below.

$$\begin{pmatrix} S_{1,1} = C * S_{1,1}^{ANT} \\ S_{2,1} = C * S_{2,1}^{ANT} \\ \vdots \\ S_{N,1} = C * S_{N,1}^{ANT} \end{pmatrix} \quad (8)$$

It may be understood that Formula (8) is shown by using the first column as an example, but the first row of the first scattering parameter matrix and the first row of the second scattering parameter matrix also have the relationship shown in Formula (8).

$$\begin{cases} (b_1 \quad b_2 \quad \cdots \quad b_M) \begin{pmatrix} S_{1,1;1,1} & S_{1,1;1,2} & \cdots & S_{1,1;1,M} \\ S_{1,2;1,1} & S_{1,2;1,2} & \cdots & S_{1,2;1,M} \\ \vdots & \vdots & \ddots & \vdots \\ S_{1,M;1,1} & S_{1,M;1,2} & \cdots & S_{1,M;1,M} \end{pmatrix} \begin{pmatrix} a_1 \\ a_2 \\ \vdots \\ a_M \end{pmatrix} = C * S_{1;1}^{ANT} \\[4em] (b_1 \quad b_2 \quad \cdots \quad b_M) \begin{pmatrix} S_{2,1;1,1} & S_{2,1;1,2} & \cdots & S_{2,1;1,M} \\ S_{2,2;1,1} & S_{2,2;1,2} & \cdots & S_{2,2;1,M} \\ \vdots & \vdots & \ddots & \vdots \\ S_{2,M;1,1} & S_{2,M;1,2} & \cdots & S_{2,M;1,M} \end{pmatrix} \begin{pmatrix} a_1 \\ a_2 \\ \vdots \\ a_M \end{pmatrix} = C * S_{2;1}^{ANT} \\[4em] \qquad\qquad\qquad\qquad\qquad \bullet \\ (b_1 \quad b_2 \quad \cdots \quad b_M) \begin{pmatrix} S_{N,1;1,1} & S_{N,1;1,2} & \cdots & S_{N,1;1,M} \\ S_{N,2;1,1} & S_{N,2;1,2} & \cdots & S_{N,2;1,M} \\ \vdots & \vdots & \ddots & \vdots \\ S_{N,M;1,1} & S_{N,M;1,2} & \cdots & S_{N,M;1,M} \end{pmatrix} \begin{pmatrix} a_1 \\ a_2 \\ \vdots \\ a_M \end{pmatrix} = C * S_{N;1}^{ANT} \end{cases} \quad (9)$$

It may be understood that the scattering parameter (scattering parameter) shown in this embodiment of this application may be used to represent a ratio of an output signal to an input signal (all other ports are connected to matched loads). A specific definition of or a method for determining the scattering parameter is not limited in this embodiment of this application.

Values of $a_1, a_2, \cdots, a_M$ and $b_1, b_2, \cdots, b_M$ may be obtained by solving the foregoing matrix equation (for example, Formula (9)). Therefore, the linear relationship between the first scattering parameter matrix and the second scattering parameter matrix is effectively implemented by setting the amplitude and the phase of the first adjustment module and the amplitude and the phase of the second adjustment module. For example, the second scattering parameter matrix is C times the first scattering parameter matrix (for example, Formula (6) or Formula (7) described above). It may be understood that Formula (8) and Formula (9) are merely examples. This embodiment of this application is also applicable to a case in which Formula (6) includes $N_2 * N_1$ interference signals or $N_2 * N_1$ different scattering parameters, or Formula (7) includes N * N interference signals or N * N different scattering parameters. A specific solving method is not limited in this embodiment of this application.

For example, interference signals formed on the $N_2$ first receive ports may meet Formula (10) below:

$$\begin{pmatrix} y_1^{ANT} \\ y_2^{ANT} \\ \vdots \\ y_{N_2}^{ANT} \end{pmatrix} = \begin{pmatrix} S_{1,1}^{ANT} & S_{1,2}^{ANT} & \cdots & S_{1,N_1}^{ANT} \\ S_{2,1}^{ANT} & S_{2,2}^{ANT} & \cdots & S_{2,N_1}^{ANT} \\ \vdots & \vdots & \ddots & \vdots \\ S_{N_2,1}^{ANT} & S_{N_2,2}^{ANT} & \cdots & S_{N_2,N_1}^{ANT} \end{pmatrix} \begin{pmatrix} x_1^{ANT} \\ x_2^{ANT} \\ \vdots \\ x_{N_1}^{ANT} \end{pmatrix} \quad (10)$$

$y_i^{ANT}$ represents an interference signal formed on the $i^{th}$ first receive port, $x_k^{ANT}$ represents a signal (which may also be understood as the first signal) input to the $k^{th}$ first transmit port, and $S_{i,k}^{ANT}$ represents the scattering parameter between the $i^{th}$ first receive port and the $k^{th}$ first transmit port, i is a positive integer greater than or equal to 2 and less than or equal to $N_2$, and k is a positive integer greater than or equal to 2 and less than or equal to $N_1$.

For example, cancellation signals formed on the $N_2$ second receive ports may meet Formula (11) below:

$$\begin{pmatrix} y_1 \\ y_2 \\ \vdots \\ y_{N_2} \end{pmatrix} = \begin{pmatrix} S_{1,1} & S_{1,2} & \cdots & S_{1,N_1} \\ S_{2,1} & S_{2,2} & \cdots & S_{2,N_1} \\ \vdots & \vdots & \ddots & \vdots \\ S_{N_2,1} & S_{N_2,2} & \cdots & S_{N_2,N_1} \end{pmatrix} \begin{pmatrix} x_1 \\ x_2 \\ \vdots \\ x_{N_1} \end{pmatrix} \quad (11)$$

$y_i$ represents a cancellation signal formed on the $i^{th}$ second receive port, $x_k$ represents a signal (which may also be understood as the second signal) input to the $k^{th}$ second transmit port, and $S_{i,k}$ represents the scattering parameter between the $i^{th}$ second receive port and the $k^{th}$ second transmit port. i is a positive integer greater than or equal to 2 and less than or equal to $N_2$, and k is a positive integer greater than or equal to 2 and less than or equal to $N_1$.

For example, the first signal and the second signal may meet Formula (12) below:

$$C * \begin{pmatrix} x_1 \\ x_2 \\ \vdots \\ x_{N_1} \end{pmatrix} = \begin{pmatrix} x_1^{ANT} \\ x_2^{ANT} \\ \vdots \\ x_{N_1}^{ANT} \end{pmatrix} \quad (12)$$

It can be learned from Formula (7) and Formula (10) to Formula (12) that the cancellation signal is equal to the interference signal (for example, an amplitude of the cancellation signal is equal to an amplitude of the interference signal; for another example, a phase of the cancellation signal is equal to a phase of the interference signal). Therefore, the interference signal may be cancelled by the combiner module by using the cancellation signal. In this embodiment of this application, the power splitting module may perform power division based on an amplitude of C:1, thereby effectively ensuring the power of the first signal. For example, the power loss of the to-be-sent signal is effectively reduced when the full-duplex apparatus sends the to-be-sent signal according to the design in this embodiment of this application. For example, when |C| = 10, a ratio of a loss power to a power of the to-be-sent signal is 20 * log(1/11) to -20 dB, and a power loss of a transmitted signal is only 20 dB.

It may be understood that the cancellation signal and the interference signal in this embodiment of this application may be equal to each other in theory. However, the cancellation signal and the interference signal in this application may alternatively differ by a relatively small numeral, and the relatively small numeral may be a commonly-used relatively small numeral $\varepsilon$ or the like. This is not limited in this embodiment of this application. Similarly, that the second scattering parameter matrix shown in this embodiment of this application is C times the first scattering parameter matrix may alternatively be represented as C times in theory. However, the second scattering parameter matrix and the C times of the first scattering parameter matrix may alternatively differ by a relatively small numeral (which may be, for example, a commonly-used relatively small numeral $\varepsilon$), or the like. This is not limited in this embodiment of this application.

The following describes, with reference to specific embodiments, a full-duplex communication apparatus provided in the embodiments of this application.

FIG. 5 is a schematic diagram of a structure of a dual-polarized antenna according to an embodiment of this application. As shown in FIG. 5, a 16T16R (which may also be understood as 16 transmit ports and 16 receive ports) dual-polarized antenna array is used. For example, one transmit port and one receive port are integrated into one transmit/receive antenna. Each transmit/receive antenna in FIG. 5 may be classified into horizontal polarization and vertical polarization. It is assumed that the horizontal polarization is used as a receive antenna and the vertical polarization is used as a transmit antenna. A transmit antenna 6 is used as an example. Interference between the transmit antenna 6 and all receive antennas may be obtained through simulation. It can be learned that, the polarization between the transmit antenna 6 and receive antennas 2, 5, 6, 7, 8, 10, and 14 is perpendicular (orthogonal). Therefore, the interference is relatively small, and simulation data is less than -65 dB. However, a polarization direction between the transmit antenna 6 and other receive antennas cannot be completely perpendicular (orthogonal). Therefore, an interference level is relatively high, and a specific interference cancellation technology is required. Due to symmetry of antenna positions, the interference of the transmit antenna 6 to receive antennas 1, 3, 9, and 11 is the same, and the interference of the transmit antenna 6 to receive antennas 4, 12, 13, and 15 is the same.

In this embodiment of this application, the interference cancellation module may be designed based on a planar waveguide. The planar waveguide is a basic electromagnetic wave propagation structure, has a simple structure, and has a relatively low cross-sectional height. A wave-absorbing material is loaded on an edge of the waveguide, so that a closed system can be formed, with no signal transmitted to the outside and no interference caused from an external signal. It may be understood that the interference cancellation module may alternatively be implemented by using a structure in another manner, or the like. This is not limited in this embodiment of this application.

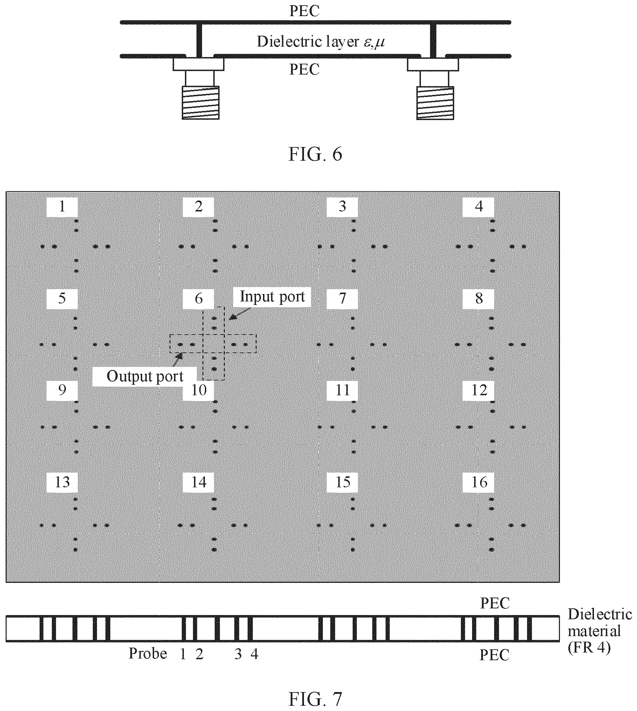

For example, FIG. 6 is a schematic diagram of a structure of a planar waveguide according to an embodiment of this application. As shown in FIG. 6, two boldfaces (perfect electric conductor (perfect electric conductor, PEC) shown in FIG. 6) in a parallel direction may represent two layers of parallel metal plates, a dielectric layer is in the middle, and a dielectric constant and a magnetic permeability are respectively $\varepsilon$ and $\mu$. It may be understood that the planar waveguide shown in this embodiment of this application may use any one of a transverse electromagnetic wave mode (transverse electromagnetic mode, TEM), a transverse electric wave (transverse electric, TE) mode, or a transverse magnetic wave (transverse magnetic, TM) mode, or may be a combination of a plurality of modes. As shown in FIG. 6, the planar waveguide is fed by using an SMA connector, and a boldface in a vertical direction is an inner conductor (or referred to as a probe) of the SMA connector. The inner conductor is connected to an upper metal surface, and an outer conductor of the SMA connector is connected to a lower metal surface. A matching resistor may be further loaded on the edge of the planar waveguide, to avoid reflection of an electromagnetic wave at the edge of the planar waveguide.

For example, FIG. 7 is a schematic diagram of a structure of an interference cancellation module according to an embodiment of this application. A parallel waveguide structure is the same as the structure shown in FIG. 6, and a second receive port is in a horizontal direction and a second transmit port is in a vertical direction. Each port may be fed by using four SMA connectors. For example, SMA probes 2 and 3 may form a subport 1 by using differential signals, and SMA probes 1 and 4 form a subport 2 through differential feeding. Differential signal feeding is used to keep consistent with a feeding mode of an antenna. In addition, placing positions of ports (for example, a second transmit port and a second receive port) in the interference cancellation module are consistent with placing positions of ports (including a first transmit port and a first receive port) of an antenna. For example, a distance between feed ports is not necessarily the same as a distance between antennas, and may be adjusted based on a structure of a planar waveguide. Usually, a delay of an input/output port (that is, the second transmit port and the second receive port) of the interference cancellation module is required to be as close as possible to a delay of an interference signal between transmit and receive antennas, to implement a maximum interference cancellation bandwidth. Due to the symmetry of port positions, a second transmit port 6 (which may also be understood as an input port of the interference cancellation module) causes same interference to second receive ports (which may also be understood as output ports of the interference cancellation module) 1, 3, 9, and 11, and the second transmit port 6 causes same interference to second receive ports 4, 12, 13, and 15.

Therefore, in this embodiment of this application, interference of a transmit antenna 6 to surrounding adjacent receive antennas (1, 3, 9, and 11; 4, 12, 13, and 15) is considered, so that scattering parameters may meet Formula (13) and Formula (14) below:

$$(b_1 \quad b_2)\begin{pmatrix} S_{11,1;6,1} & S_{11,1;6,2} \\ S_{11,2;6,1} & S_{11,2;6,2} \end{pmatrix}\begin{pmatrix} a_1 \\ a_2 \end{pmatrix} = C \cdot S_{11;6}^{ANT} \quad (13);$$

and

$$(b_1 \quad b_2)\begin{pmatrix} S_{12,1;6,1} & S_{12,1;6,2} \\ S_{12,2;6,1} & S_{12,2;6,2} \end{pmatrix}\begin{pmatrix} a_1 \\ a_2 \end{pmatrix} = C \cdot S_{12;6}^{ANT} \quad (14)$$

$a_1$ and az are respectively an amplitude and a phase (for example, may be a complex number) of a transmit subport 1 and an amplitude and a phase of a transmit subport 2. For second transmit ports, subports at corresponding positions all have a same amplitude and a same phase. $b_1$ and $b_2$ are respectively an amplitude and a phase of a receive subport 1 and an amplitude and a phase of a receive subport 2. For receive ports, subports at corresponding positions have a same amplitude and a same phase. It may be understood that, for descriptions of other parameters in Formula (13) and Formula (14), refer to the foregoing descriptions. Details are not described herein again.

The foregoing matrix equation is solved to obtain an amplitude and a phase of the transmit subport and an amplitude and a phase of the receive subport, so that the scattering parameter between the transmit and receive ports of the interference cancellation module and the scattering parameter between the transmit and receive ports of the antenna can meet a linear relationship (for example, C times). During an actual application, an amplitude and a phase of a port may be adjusted by using a digital adjustable attenuator and a digital adjustable phase shifter, and then the foregoing matrix equation is obtained by using a gradient descent method.

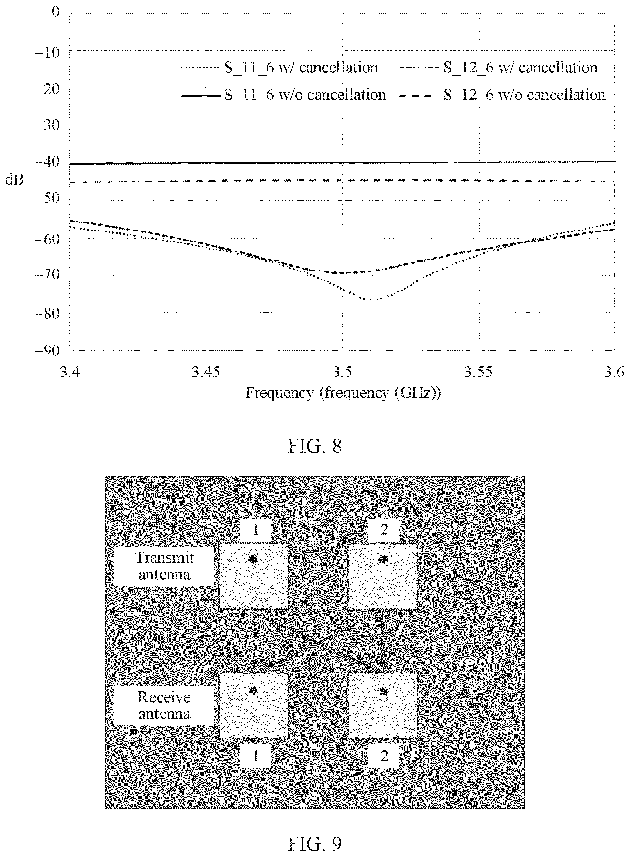

FIG. 8 is a schematic diagram of a simulation result according to an embodiment of this application. In FIG. 8, horizontal coordinates represent a frequency (frequency), and vertical coordinates represent an amplitude of a scattering parameter (which may also be referred to as interference). For example, FIG. 8 may indicate interference (for example, S_11_6 w/cancellation (applying this application or with reference to this application) in FIG. 8; for another example, S_11_6 w/o cancellation (not applying this application or not using the interference cancellation module designed in this application)) between a second receive port 11 and a second transmit port 6, or interference (for example, S_12_6w/cancellation (applying this application or with reference to this application) in FIG. 8; for another example, S_12_6w/o cancellation (not applying this application or not using the interference cancellation module designed in this application)) between a second receive port 12 and the second transmit port 6. It may be understood that the simulation result shown in FIG. 8 is shown by using an example in which an intermediate dielectric material of a planar waveguide is FR 4, a relative dielectric constant is 4.4, a relative magnetic permeability is 1, and a thickness of a dielectric layer is 2 mm.

It can be learned from FIG. 8 that interference of a transmit antenna 6 to a receive antenna 11 is reduced from -40 dB to approximately -60 dB. Because interference of the transmit antenna 6 to receive antennas 1, 3, 9, and 11 is the same, the interference of the transmit antenna 6 to these receive antennas is all reduced to -60 dB. Interference of the transmit antenna 6 to a receive antenna 12 is reduced from -45 dB to approximately -80 dB. Because interference of the transmit antenna 6 to receive antennas 4, 12, 13, and 15 is the same, the interference of the transmit antenna 6 to these receive antennas may also be reduced or even cancelled. It should be noted that an effect of interference cancellation is related to consistency of antenna interference. Due to impact of machining accuracy, interference signals are different to some extent. Therefore, an interference cancellation technology has different effects on cancellation of different antenna interference. In addition, in this embodiment of this application, only two subports are used to fit two different interference signals. Usually, more subports indicate more interference signals that can be fitted and better interference cancellation effects. However, increasing a quantity of subports also increases complexity of system hardware. Although only two different types of interference signals are considered in this embodiment of this application, the two types of interference signals are interference of a transmit antenna to a surrounding receive antenna that is relatively close to the transmit antenna, and strength of the interference signals is relatively high. Another receive antenna is relatively far away from the transmit antenna, and strength of an interference signal is relatively low. Therefore, a quantity of subports shown in this embodiment of this application is provided after a compromise is made between an interference cancellation effect and system complexity.

The interference cancellation module provided in this embodiment of this application is a multiport network based on a planar waveguide, and each port is extended to a plurality of subports. An amplitude and a phase of the subport are adjusted, so that a second scattering parameter matrix is C times a first scattering parameter matrix. Compared with a manner in which a mirror antenna is used, a transmit signal (for example, a to-be-sent signal) in this embodiment of this application does not need to be equally divided, and has little impact on transmit power. In addition, the planar waveguide is of a low-profile structure, and occupies a small volume. It may be understood that the embodiments of this application may be applied to not only a 16T6R antenna, but also a larger quantity of MIMO antennas.

FIG. 9 is a schematic diagram of a structure of a patch antenna according to an embodiment of this application. As shown in FIG. 9, for a 2T2R patch antenna array, two antennas in a first row are set as transmit antennas, and two antennas in a second row are set as receive antennas. Scattering parameters between the transmit antennas and the receive antennas may be represented as that shown in Formula (15):

$$\begin{pmatrix} S_{1,1}^{ANT} & S_{1,2}^{ANT} \\ S_{2,1}^{ANT} & S_{2,2}^{ANT} \end{pmatrix} \quad (15)$$

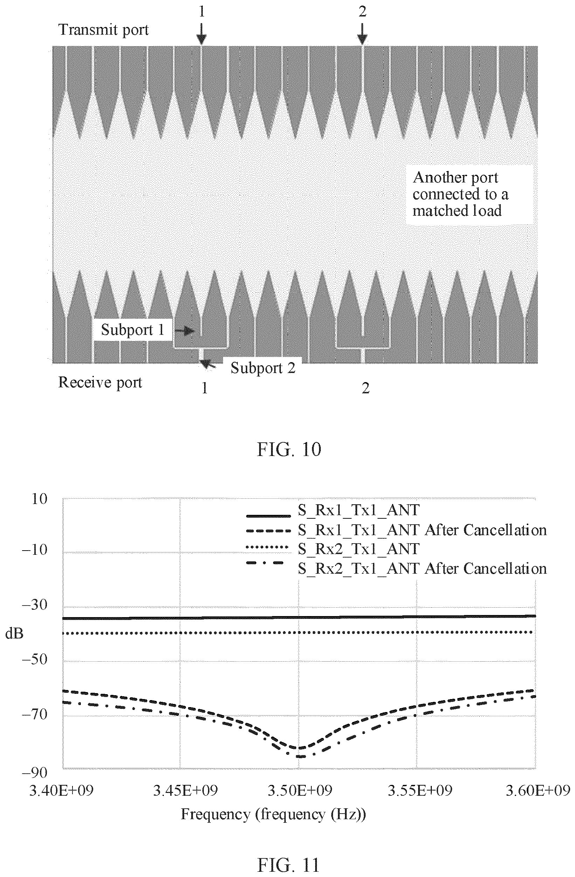

Due to symmetry of antenna placing positions, $S_{1,1}^{ANT} = S_{2,2}^{ANT}$ and $S_{1,2}^{ANT} = S_{2,1}^{ANT}$. Therefore, two different interference signals may be considered, for example, $S_{1,1}^{ANT}$ and $S_{2,1}^{ANT}$ A simulation scattering parameter of an interference signal is shown in FIG. 11, where S_Txl_Txl represents a return loss of an antenna 1, and usually the return loss is required to be less than -10 dB. Therefore, an interference cancellation module designed in this embodiment of this application may be a 2 x 2 (or may be denoted as 2 * 2) port network, and a second scattering parameter matrix is in a linear relationship with Formula (15).

For example, a structure of the interference cancellation module may be shown in FIG. 10. The interference cancellation module includes two second transmit ports (which are shown in FIG. 10 by using a transmit port as an example) and two second receive ports (which are shown in FIG. 10 by using a receive port as an example), quantities of which are consistent with a quantity of antennas shown in FIG. 9. For example, the second transmit port may correspond to one transmit subport, and the second receive port may correspond to two receive subports (for example, a subport 1 and a subport 2 shown in FIG. 10). It may be understood that the interference cancellation module is also designed based on a planar waveguide, a thickness of a dielectric layer is 2 mm, a dielectric material is FR 4, a relative dielectric constant is 4.4, and a relative magnetic permeability is 1. For example, the scattering parameters may meet Formula (16) and Formula (17), or Formula (16) and Formula (17) may be represented as Formula (18):

$$(b_1 \quad b_2)\begin{pmatrix}S_{1,1;1}\\S_{1,1;2}\end{pmatrix} = C \cdot S_{1;1}^{ANT} \quad (16);$$

$$(b_1 \quad b_2)\begin{pmatrix}S_{2,1;1}\\S_{2;2;1}\end{pmatrix} = C \cdot S_{2;1}^{ANT} \quad (17);$$

and

$$(b_1 \quad b_2)\begin{pmatrix}S_{1,1;1} & S_{2,1;1}\\S_{1,2;1} & S_{2,2;1}\end{pmatrix} = C \cdot \begin{pmatrix}S_{1;1}^{ANT} & S_{2;1}^{ANT}\end{pmatrix} \quad (18)$$

It may be understood that, for specific descriptions of parameters shown in Formula (16) to Formula (18), refer to the foregoing embodiments. Details are not described herein again.

It is assumed that C = 10, and the foregoing matrix equation is solved, to obtain an amplitude and a phase of the transmit subport. In an actual circuit, the amplitude and the phase of the subport may be adjusted by using an adjustable attenuator and an adjustable phase shifter.

FIG. 11 is a schematic diagram of a simulation result according to an embodiment of this application. As shown in FIG. 11, the interference cancellation module shown in the embodiments of this application is used, so that interference of a transmit antenna 1 to a receive antenna 1 is reduced from -35 dB to less than -60 dB, and interference of the transmit antenna 1 to a receive antenna 2 is reduced from -40 dB to less than -60 dB. Due to symmetry of a structure, interference of a transmit antenna 2 to the two receive antennas is also cancelled. It may be understood that S_Rxl_Txl_ANT in FIG. 11 indicates interference of the transmit antenna 1 to the receive antenna 1 caused when this application is not applied (which may also be understood as that the interference cancellation module designed in this application is not used). S_Rx1_Tx1_ANTAfter Cancellation indicates interference of the transmit antenna 1 to the receive antenna 1 caused when this application is applied (which may also be understood as that the interference cancellation module designed in this application is used). S_Rx2_Txl_ANT indicates interference of the transmit antenna 1 to the receive antenna 2 caused when this application is not applied (which may also be understood as that the interference cancellation module designed in this application is not used). S_Rx2_Txl_ANT After Cancellation indicates interference of the transmit antenna 1 to the receive antenna 2 caused when this application is applied (which may also be understood as that the interference cancellation module designed in this application is used).

When the interference cancellation module in the embodiments of this application is used in interference cancellation between patch antennas, not only interference between adjacent antennas can be cancelled, but also interference from more surrounding antennas can be cancelled. In addition, an adjustable phase shifter and an adjustable attenuator are used, so that a cancellation signal is adjusted more accurately, and an interference cancellation effect is better.

It may be understood that during specific implementation, the full-duplex communication apparatus may include more components, such as a power amplifier, a phase shifter, an analog-to-digital converter, or a digital-to-analog converter, than those in the full-duplex communication apparatus shown in this application. This is not limited in this application.

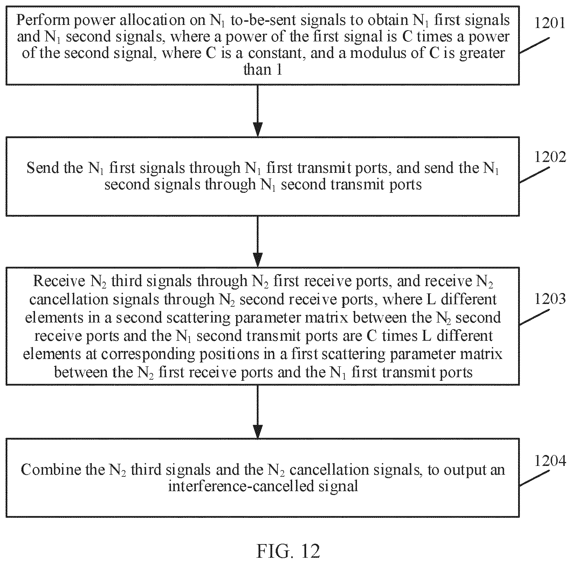

Based on the foregoing descriptions of the interference cancellation principle, an embodiment of this application further provides a full-duplex communication method. As shown in FIG. 12, a procedure of the full-duplex communication method further provided in this embodiment of this application is as follows:

1201: Perform power allocation on $N_1$ to-be-sent signals to obtain $N_1$ first signals and $N_1$ second signals, where a power of the first signal is C times a power of the second signal, where C is a constant, and a modulus of C is greater than 1.

$N_1$ is an integer greater than or equal to 2.

1202: Send the $N_1$ first signals through $N_1$ first transmit ports, and send the $N_1$ second signals through $N_1$ second transmit ports.

1203: Receive Nz third signals through Nz first receive ports, and receive $N_2$ cancellation signals through $N_2$ second receive ports, where L different elements in a second scattering parameter matrix between the $N_2$ second receive ports and the $N_1$ second transmit ports are C times L different elements at corresponding positions in a first scattering parameter matrix between the $N_2$ first receive ports and the $N_1$ first transmit ports.

It may be understood that for descriptions of the first scattering parameter matrix, the second scattering parameter matrix, the L different elements, and the like, refer to the foregoing embodiments. Details are not described herein again.

In this embodiment of this application, a $p^{th}$ third signal in the $N_2$ third signals includes an interference signal and a signal from another communication apparatus. For example, the interference signal includes a signal that is obtained by coupling the $N_1$ first signals sent through the $N_1$ first transmit ports and that is received through a $p^{th}$ first receive port. For example, a $q^{th}$ cancellation signal in the $N_2$ cancellation signals is a signal obtained by coupling the $N_1$ second signals sent through the $N_1$ second transmit ports. $N_2$ is an integer greater than or equal to 2, p is any integer in 2, ..., and $N_2$, and q is any integer in 2, ..., and $N_2$.

It may be understood that, although the interference signal included in the $p^{th}$ third signal includes the signal that is obtained by coupling the $N_1$ first signals sent through the $N_1$ first transmit ports and that is received through the $p^{th}$ first receive port, during specific implementation, as shown in FIG. 5, the interference of the transmit antenna 6 to the receive antenna 16 is relatively small, and therefore may not be considered. For another example, interference of the transmit antenna 6 to the receive antenna 5 is excessively small (which may also be understood as orthogonal, that is, there is no interference), and therefore may not be considered. In other words, during specific implementation, the Nz third signals may not include $N_1 * N_2$ interference signals.

1204: Combine the $N_2$ third signals and the $N_2$ cancellation signals, to output an interference-cancelled signal.

It may be understood that, for specific descriptions of FIG. 12, refer to the foregoing embodiments. Details are not described herein again.

It may be understood that, in the foregoing various embodiments, for a part that is not described in detail in one embodiment, refer to that in another embodiment.

An embodiment of this application provides a computer storage medium, storing a computer program. The computer program includes instructions used to perform the full-duplex communication method provided in the foregoing embodiments.

An embodiment of this application provides a computer program product including instructions. When the computer program product runs on a computer, the computer is enabled to perform the full-duplex communication method provided in the foregoing embodiments.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve the technical effects of the solutions provided in the embodiments in this application.

In addition, functional units in the embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable-storage medium, and includes several instructions for instructing a computer device (which may be a personal computer, a server, a network device, or the like) to perform all or some of the steps of the methods described in embodiments of this application. The readable-storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A full-duplex communication apparatus, comprising:

   an antenna, an interference cancellation module, a power splitting module, and a combiner module, wherein the antenna comprises $N_1$ first transmit ports and $N_2$ first receive ports, wherein $N_1$ is an integer greater than or equal to 2, and $N_2$ is an integer greater than or equal to 2;
   the interference cancellation module comprises $N_1$ second transmit ports and $N_2$ second receive ports; a first scattering parameter matrix comprises L different elements, a second scattering parameter matrix comprises L different elements, positions of the L different elements in the first scattering parameter matrix and positions of the L different elements in the second scattering parameter matrix are correspondingly the same, the L different elements in the second scattering parameter matrix are C times the L different elements in the first scattering parameter matrix, the first scattering parameter matrix is a scattering parameter matrix between the $N_2$ first receive ports and the $N_1$ first transmit ports, and the second scattering parameter matrix is a scattering parameter matrix between the $N_2$ second receive ports and the $N_1$ second transmit ports, wherein L is a positive integer less than or equal to $N_1 * N_2$, C is a constant, and a modulus of C is greater than 1;
   the power splitting module comprises $N_1$ first output ports and $N_1$ second output ports, wherein the first output ports are one-to-one connected to the first transmit ports, and the second output ports are one-to-one connected to the second transmit ports; and
   the combiner module comprises $N_2$ first input ports and $N_2$ second input ports, wherein the first input ports are one-to-one connected to the first receive ports, and the second input ports are one-to-one connected to the second receive ports.

2. The apparatus according to claim 1, wherein the L different elements are in a same row or a same column.

3. The apparatus according to claim 2, wherein the L different elements comprise all elements in an $m^{th}$ row or an $n^{th}$ column, wherein m is a positive integer, and n is a positive integer.

4. The apparatus according to any one of claims 1 to 3, wherein the second scattering parameter matrix is C times the first scattering parameter matrix.

5. The apparatus according to any one of claims 1 to 4, wherein the modulus of C is greater than or equal to 10.

6. The apparatus according to any one of claims 1 to 5, wherein each of the second transmit ports comprises $M_1$ transmit subports, and each of the second receive ports comprises $M_2$ receive subports, wherein $M_1$ is a positive integer, and M2 is a positive integer;

   the interference cancellation module further comprises at least one of the following: a plurality of first adjustment modules or a plurality of second adjustment modules, each of the transmit subports corresponds to one first adjustment module, and each of the receive subports corresponds to one second adjustment module; and
   the first adjustment module is configured to: after adjusting at least one of an amplitude or a phase of a signal, input the adjusted signal to a corresponding transmit subport, and the second adjustment module is configured to adjust at least one of an amplitude or a phase of a cancellation signal input to a corresponding receive subport, so that the L different elements in the second scattering parameter matrix are C times the L different elements in the first scattering parameter matrix.

7. The apparatus according to claim 6, wherein first adjustment modules corresponding to transmit subports at corresponding positions in all of the second transmit ports have a same amplitude and a same phase, or second adjustment modules corresponding to receive subports at corresponding positions in all of the second receive ports have a same amplitude and a same phase.

8. The apparatus according to any one of claims 1 to 7, wherein $N_1$ is equal to $N_2$.

9. The apparatus according to claim 8, wherein the second scattering parameter matrix and the first scattering parameter matrix meet the following relationship:

$$\begin{pmatrix} S_{1,1} & S_{1,2} & \cdots & S_{1,N} \\ S_{2,1} & S_{2,2} & \cdots & S_{2,N} \\ \vdots & \vdots & \ddots & \vdots \\ S_{N,1} & S_{N,2} & \cdots & S_{N,N} \end{pmatrix} = C * \begin{pmatrix} S_{1,1}^{ANT} & S_{1,2}^{ANT} & \cdots & S_{1,N}^{ANT} \\ S_{2,1}^{ANT} & S_{2,2}^{ANT} & \cdots & S_{2,N}^{ANT} \\ \vdots & \vdots & \ddots & \vdots \\ S_{N,1}^{ANT} & S_{N,2}^{ANT} & \cdots & S_{N,N}^{ANT} \end{pmatrix},$$

wherein

$S_{i,k}$ represents a scattering parameter between an $i^{th}$ second receive port and a $k^{th}$ second transmit port, $S_{i,k}^{ANT}$ represents a scattering parameter between an $i^{th}$ first receive port and a $k^{th}$ first transmit port, i is an integer less than or equal to N and greater than or equal to 2, k is an integer less than or equal to N and greater than or equal to 2, N represents a quantity of the first transmit ports, and the quantity of the first transmit ports is equal to a quantity of the first receive ports.

10. The apparatus according to claim 9, wherein $S_{i,k}$ meets the following relationship:

$$S_{i,k} = \begin{pmatrix} S_{i,1;k,1} & S_{i,1;k,2} & \cdots & S_{i,1;k,M} \\ S_{i,2;k,1} & S_{i,2;k,2} & \cdots & S_{i,2;k,M} \\ \vdots & \vdots & \ddots & \vdots \\ S_{i,M;k,1} & S_{i,M;k,2} & \cdots & S_{i,M;k,M} \end{pmatrix} \begin{pmatrix} a_1 \\ a_2 \\ \vdots \\ a_M \end{pmatrix};$$

$$S_{i,k} = \begin{pmatrix} b_1 & b_2 & \cdots & b_M \end{pmatrix} \begin{pmatrix} S_{i,1;k,1} & S_{i,1;k,2} & \cdots & S_{i,1;k,M} \\ S_{i,2;k,1} & S_{i,2;k,2} & \cdots & S_{i,2;k,M} \\ \vdots & \vdots & \ddots & \vdots \\ S_{i,M;k,1} & S_{i,M;k,2} & \cdots & S_{i,M;k,M} \end{pmatrix};$$

or

$$S_{i,k} = \begin{pmatrix} b_1 & b_2 & \cdots & b_M \end{pmatrix} \begin{pmatrix} S_{i,1;k,1} & S_{i,1;k,2} & \cdots & S_{i,1;k,M} \\ S_{i,2;k,1} & S_{i,2;k,2} & \cdots & S_{i,2;k,M} \\ \vdots & \vdots & \ddots & \vdots \\ S_{i,M;k,1} & S_{i,M;k,2} & \cdots & S_{i,M;k,M} \end{pmatrix} \begin{pmatrix} a_1 \\ a_2 \\ \vdots \\ a_M \end{pmatrix},$$

wherein

$S_{i,j;k,l}$ represents a scattering parameter between a $j^{th}$ receive subport of the $i^{th}$ second receive port and an $l^{th}$ transmit subport of the $k^{th}$ second transmit port, wherein j is a positive integer less than or equal to M, l is a positive integer less than or equal to M, and $M_1 = M_2 = M$; and $a_M$ represents an amplitude and a phase of a first adjustment module corresponding to an $M^{th}$ transmit subport, and $b_M$ represents an amplitude and a phase of a second adjustment module corresponding to the $M^{th}$ transmit subport.

11. A full-duplex communication method, wherein the method comprises:

performing power allocation on $N_1$ to-be-sent signals to obtain $N_1$ first signals and $N_1$ second signals, wherein a power of the first signal is C times power of the second signal, wherein $N_1$ is an integer greater than or equal to 2, C is a constant, and a modulus of C is greater than 1;

sending the $N_1$ first signals through $N_1$ first transmit ports, and sending the $N_1$ second signals through $N_1$ second transmit ports;

receiving $N_2$ third signals through $N_2$ first receive ports, and receiving $N_2$ cancellation signals through $N_2$ second receive ports, wherein L different elements in a second scattering parameter matrix are C times L different elements at corresponding positions in a first scattering parameter matrix, the first scattering parameter matrix is a scattering parameter matrix between the $N_2$ first receive ports and the $N_1$ first transmit ports, and the second scattering parameter matrix is a scattering parameter matrix between the $N_2$ second receive ports and the $N_1$ second transmit ports; and a $p^{th}$ third signal in the $N_2$ third signals comprises an interference signal and a signal from another communication apparatus, the interference signal comprises a signal that is obtained by coupling the $N_1$ first signals sent through the $N_1$ first transmit ports and that is received through a $p^{th}$ first receive port, and a $q^{th}$ cancellation signal in the $N_2$ cancellation signals is a signal obtained by coupling the $N_1$ second signals sent through the $N_1$ second transmit ports, wherein $N_2$ is an integer greater than or equal to 2, p is any integer in 2, ..., and $N_2$, and q is any integer in 2, ..., and $N_2$; and

combining the $N_2$ third signals and the $N_2$ cancellation signals, to output an interference-cancelled signal.

12. The method according to claim 11, wherein the L different elements are in a same row or a same column.

13. The method according to claim 12, wherein the L different elements comprise all elements in an $m^{th}$ row or an $n^{th}$ column, wherein m is a positive integer, and n is a positive integer.

14. The method according to any one of claims 11 to 13, wherein the second scattering parameter matrix is C times the first scattering parameter matrix.

15. The method according to any one of claims 11 to 14, wherein the modulus of C is greater than or equal to 10.

16. The method according to any one of claims 11 to 15, wherein each of the second transmit ports comprises $M_1$ transmit subports, and each of the second receive ports comprises $M_2$ receive subports, wherein $M_1$ is a positive integer, and $M_2$ is a positive integer;

the sending the $N_1$ second signals through $N_1$ second transmit ports comprises:

sending the $N_1$ second signals based on the $M_1$ transmit subports comprised in each of the second transmit ports; and

the receiving $N_2$ cancellation signals through $N_2$ second receive ports comprises:

receiving the $N_2$ cancellation signals based on the $M_2$ receive subports comprised in each of the second receive ports.

17. The method according to claim 16, wherein

each element in the second scattering parameter matrix is obtained based on a scattering parameter matrix between the $M_2$ receive subports and the $M_1$ transmit subports, an amplitude and a phase of a first adjustment module corresponding to each of the receive subports, and an amplitude and a phase of a second adjustment module corresponding to each of the transmit subports.

18. The method according to claim 17, wherein first adjustment modules corresponding to transmit subports at corresponding positions in all of the second transmit ports have a same amplitude and a same phase, or second adjustment modules corresponding to receive subports at corresponding positions in all of the second receive ports have a same amplitude and a same phase.

19. The method according to any one of claims 11 to 18, wherein $N_1$ is equal to $N_2$.

20. The method according to claim 19, wherein the second scattering parameter matrix and the first scattering parameter matrix meet the following relationship:

$$\begin{pmatrix} S_{1,1} & S_{1,2} & \cdots & S_{1,N} \\ S_{2,1} & S_{2,2} & \cdots & S_{2,N} \\ \vdots & \vdots & \ddots & \vdots \\ S_{N,1} & S_{N,2} & \cdots & S_{N,N} \end{pmatrix} = C * \begin{pmatrix} S_{1,1}^{ANT} & S_{1,2}^{ANT} & \cdots & S_{1,N}^{ANT} \\ S_{2,1}^{ANT} & S_{2,2}^{ANT} & \cdots & S_{2,N}^{ANT} \\ \vdots & \vdots & \ddots & \vdots \\ S_{N,1}^{ANT} & S_{N,2}^{ANT} & \cdots & S_{N,N}^{ANT} \end{pmatrix},$$

wherein

$S_{i,k}$ represents a scattering parameter between an $i^{th}$ second receive port and a $k^{th}$ second transmit port, $S_{i,k}^{ANT}$ represents a scattering parameter between an $i^{th}$ first receive port and a $k^{th}$ first transmit port, i is an integer less than or equal to N and greater than or equal to 2, k is an integer less than or equal to N and greater than or equal to 2, N represents a quantity of the first transmit ports, and the quantity of the first transmit ports is equal to a quantity of the first receive ports.

21. The method according to claim 20, wherein $S_{i,k}$ meets the following relationship:

$$S_{i,k} = \begin{pmatrix} S_{i,1;k,1} & S_{i,1;k,2} & \cdots & S_{i,1;k,M} \\ S_{i,2;k,1} & S_{i,2;k,2} & \cdots & S_{i,2;k,M} \\ \vdots & \vdots & \ddots & \vdots \\ S_{i,M;k,1} & S_{i,M;k,2} & \cdots & S_{i,M;k,M} \end{pmatrix} \begin{pmatrix} a_1 \\ a_2 \\ \vdots \\ a_M \end{pmatrix},$$

$$S_{i,k} = \begin{pmatrix} b_1 & b_2 & \cdots & b_M \end{pmatrix} \begin{pmatrix} S_{i,1;k,1} & S_{i,1;k,2} & \cdots & S_{i,1;k,M} \\ S_{i,2;k,1} & S_{i,2;k,2} & \cdots & S_{i,2;k,M} \\ \vdots & \vdots & \ddots & \vdots \\ S_{i,M;k,1} & S_{i,M;k,2} & \cdots & S_{i,M;k,M} \end{pmatrix},$$

or

$$S_{i,k} = \begin{pmatrix} b_1 & b_2 & \cdots & b_M \end{pmatrix} \begin{pmatrix} S_{i,1;k,1} & S_{i,1;k,2} & \cdots & S_{i,1;k,M} \\ S_{i,2;k,1} & S_{i,2;k,2} & \cdots & S_{i,2;k,M} \\ \vdots & \vdots & \ddots & \vdots \\ S_{i,M;k,1} & S_{i,M;k,2} & \cdots & S_{i,M;k,M} \end{pmatrix} \begin{pmatrix} a_1 \\ a_2 \\ \vdots \\ a_M \end{pmatrix},$$

wherein

$S_{i,j;k,l}$ represents a scattering parameter between a $j^{th}$ receive subport of the $i^{th}$ second receive port and an $1^{th}$ transmit subport of the $k^{th}$ second transmit port, wherein j is a positive integer less than or equal to M, 1 is a positive integer less than or equal to M, and $M_1 = M_2 = M$; and $a_M$ represents an amplitude and a phase of a first adjustment module corresponding to an $M^{th}$ transmit subport, and $b_M$ represents an amplitude and a phase of a second adjustment module corresponding to the $M^{th}$ transmit subport.

22. A computer-readable storage medium, wherein the computer-readable storage medium is configured to store a computer program or instructions; when the computer program or the instructions is/are executed, the method according to any one of claims 11 to 21 is performed.

23. A computer program product, wherein the computer program product comprises a computer program or instructions; when the computer program or the instructions is/are executed, the method according to any one of claims 11 to 21 is performed.

FIG. 1

FIG. 2

FIG. 3

FIG. 4

FIG. 5

PEC

Dielectric layer $\varepsilon, \mu$

PEC

FIG. 6

PEC

Dielectric material (FR 4)

Probe 1 2 3 4

PEC

FIG. 7

FIG. 8

FIG. 9

FIG. 10

FIG. 11

Perform power allocation on $N_1$ to-be-sent signals to obtain $N_1$ first signals and $N_1$ second signals, where a power of the first signal is C times a power of the second signal, where C is a constant, and a modulus of C is greater than 1 — 1201

Send the $N_1$ first signals through $N_1$ first transmit ports, and send the $N_1$ second signals through $N_1$ second transmit ports — 1202

Receive $N_2$ third signals through $N_2$ first receive ports, and receive $N_2$ cancellation signals through $N_2$ second receive ports, where L different elements in a second scattering parameter matrix between the $N_2$ second receive ports and the $N_1$ second transmit ports are C times L different elements at corresponding positions in a first scattering parameter matrix between the $N_2$ first receive ports and the $N_1$ first transmit ports — 1203

Combine the $N_2$ third signals and the $N_2$ cancellation signals, to output an interference-cancelled signal — 1204

FIG. 12

## INTERNATIONAL SEARCH REPORT

| International application No. |
|---|
| **PCT/CN2022/095738** |

**A. CLASSIFICATION OF SUBJECT MATTER**

H04B 1/525(2015.01)i; H04B 1/04(2006.01)i; H04B 1/10(2006.01)i

According to International Patent Classification (IPC) or to both national classification and IPC

**B. FIELDS SEARCHED**

Minimum documentation searched (classification system followed by classification symbols)

H04B1/-

Documentation searched other than minimum documentation to the extent that such documents are included in the fields searched

Electronic data base consulted during the international search (name of data base and, where practicable, search terms used)

CNTXT, CNABS, CNKI: 干扰, 消除, 抵消, 抑制, 对消, 限制, 散射, 矩阵, 倍, 天线; WOTXT, EPTXT, USTXT, VEN, 3GPP: interfere+, decreas+, cancel+, eliminat+, scatter+, matrix, multiple?, antenna

**C. DOCUMENTS CONSIDERED TO BE RELEVANT**

| Category* | Citation of document, with indication, where appropriate, of the relevant passages | Relevant to claim No. |
|---|---|---|
| Y | CN 111953371 A (HUAWEI TECHNOLOGIES CO., LTD.) 17 November 2020 (2020-11-17) description, paragraphs [0021]-[0037] [0186] and [0187] | 1-23 |
| Y | CN 112543037 A (HUAWEI TECHNOLOGIES CO., LTD.) 23 March 2021 (2021-03-23) description, paragraphs [0084] and [0124] | 1-23 |
| A | CN 107079374 A (HUAWEI TECHNOLOGIES CO., LTD.) 18 August 2017 (2017-08-18) entire document | 1-23 |
| A | CN 112736494 A (BEIJING REMOTE SENSING EQUIPMENT INSTITUTE) 30 April 2021 (2021-04-30) entire document | 1-23 |
| A | US 2008198071 A1 (SAMSUNG ELECTRONICS CO., LTD.) 21 August 2008 (2008-08-21) entire document | 1-23 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 July 2022** | **29 July 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/095738**

| Patent document cited in search report | | | Publication date (day/month/year) | Patent family member(s) | | | Publication date (day/month/year) |
|---|---|---|---|---|---|---|---|
| CN | 111953371 | A | 17 November 2020 | WO | 2020220927 | A1 | 05 November 2020 |
| | | | | CN | 111953371 | B | 20 August 2021 |
| CN | 112543037 | A | 23 March 2021 | WO | 2021052102 | A1 | 25 March 2021 |
| CN | 107079374 | A | 18 August 2017 | WO | 2016179759 | A1 | 17 November 2016 |
| | | | | CN | 107079374 | B | 17 December 2019 |
| CN | 112736494 | A | 30 April 2021 | None | | | |
| US | 2008198071 | A1 | 21 August 2008 | KR | 20080075803 | A | 19 August 2008 |
| | | | | KR | 100947504 | B1 | 12 March 2010 |
| | | | | US | 7786934 | B2 | 31 August 2010 |

Form PCT/ISA/210 (patent family annex) (January 2015)

32

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110632854